## Europäisches Patentamt

## European Patent Office

## Office européen des brevets

(19)

(11) Numéro de publication: **0 133 397**
**B1**

(12) # FASCICULE DE BREVET EUROPÉEN

(45) Date de publication du fascicule du brevet:
02.09.87

(51) Int. Cl.⁴: **G 05 B 19/04**, G 06 F 15/46

(21) Numéro de dépôt: **84401531.3**

(22) Date de dépôt: **20.07.84**

(54) Terminal pour l'élaboration de programmes utilisables par un automate programmable.

(30) Priorité: **25.07.83 FR 8312268**

(43) Date de publication de la demande:
**20.02.85 Bulletin 85/8**

(45) Mention de la délivrance du brevet:
**02.09.87 Bulletin 87/36**

(84) Etats contractants désignés:
**BE DE FR GB IT NL SE**

(56) Documents cité:
**EP-A-0 014 047**
**EP-A-0 089 194**
**DE-A-3 222 305**
**GB-A-2 111 266**
**US-A-3 964 026**

**BYTE, vol. 8, no. 6, juin 1983, pages 282-286, Byte Publications Inc., New York, US; S. WSZOLA: "NEC PC-8201 portable computer - A new contender with Tandy's model 100"**
**PATENTS ABSTRACTS OF JAPAN, vol. 6, no. 148 (P-133) 1026 , 7 août 1982, page 1026 P 133**

(73) Titulaire: **LA TELEMECANIQUE ELECTRIQUE, 33 bis, avenue du Maréchal Joffre, F-92000 Nanterre (FR)**

(72) Inventeur: **Desserrieres, René, 11, boulevard Clémenceau, F-38100 Grenoble (FR)**
Inventeur: **Doucet, René, Lumbin, F-38660 Le Touvet (FR)**
Inventeur: **Thillet, Dominique, Chemin des Petiots Muraniette, F-38420 Domene (FR)**

(74) Mandataire: **Marquer, Francis, CABINET MOUTARD 35, avenue Victor Hugo Résidence Champfleury, F-78180 Voisins- le- Bretonneux (FR)**

## Description

La présente invention concerne un terminal pour la conception, la programmation, la mise en route et/ou la maintenance d'un automatisme utilisant un automate programmable.

D'une manière générale on sait qu'un automate programmable comprend habituellement un nombre déterminé d'entrées pouvant être connectées aux éléments de détection (capteurs) du processus, un nombre déterminé de sorties de commande destinées à être respectivement connectées à chacun des actionneurs du processus, et un processeur permettant d'assurer le déroulement séquentiel des opérations (commande des actionneurs) que doit effectuer le processus, compte tenu des informations fournies par les détecteurs.

Ce processeur fait donc intervenir, pour assurer l'ordonnancement de ces opérations, un programme spécifique du processus que l'on veut commander.

Ce programme est en général élaboré sur un ordinateur ou analogue en un langage évolué approprié, puis, après un traitement par l'ordinateur (compilation), retranscrit en un langage machine pour obtenir un programme objet directement utilisable par l'automate. Ce programme objet peut ensuite être transmis à l'automate directement par une liaison prévue à cet effet entre l'ordinateur et l'automate. Il peut également être mémorisé sur une mémoire périphérique telle que, par exemple une bande magnétique, une disquette, ou même sur une mémoire programmable par l'utilisateur (PROM), par exemple une mémoire programmable à effacement (EPROM). Dans ce cas, l'automate doit être nécessairement équipé d'une unité de lecture correspondante, par exemple un lecteur de bandes magnétiques ou un lecteur de disquettes, ou même d'un connecteur permettant le branchement de la mémoire programmable.

Or, à l'image de tous les systèmes informatiques, la programmation de l'automate par les méthodes classiques s'effectue en deux phases, à savoir:

- une phase d'analyse de l'automatisme que l'on veut réaliser et qui fait appel à un analyste compétent à la fois en automatique et en informatique, et

- une phase de programmation proprement dite qui requiert des connaissances purement informatiques.

Il est clair que cette dualité de compétences exigées pour la programmation constitue un obstacle important à la diffusion des automates programmables.

Pour tenter de supprimer cet inconvénient, on a déjà réalisé des terminaux comprenant un clavier, un écran et un processeur permettant de définir des automatismes au moyen de schémas réalisés à l'écran selon un mode de représentation graphique identifiable par le processeur. Dans ce cas, la programmation de l'automate n'exige plus de connaissance étendue en informatique.

L'opérateur se contente de réaliser à l'écran les schémas de l'automatisme, tandis que le processeur se charge d'élaborer le programme directement à partir de ces schémas.

A l'heure actuelle, on dispose notamment à cet effet d'un mode de représentation graphique dit "à contacts" qui consiste à représenter l'automatisme sous forme de contacts et de bobines de relais, ainsi que des blocs de fonction pouvant figurer des organes tels que des compteurs, des programmeurs, des opérateurs arithmétiques etc..., voir p. ex. EP-A-14 057. Ce mode de représentation graphique convient pour l'élaboration d'automatismes relativement simples. Par contre il s'avère peu pratique dans le cas d'automatismes plus complexes, notamment du fait qu'il ne fait pas suffisamment apparaître le déroulement séquentiel des opérations effectuées par le processus.

L'invention a donc pour but de supprimer cet inconvénient. Elle propose donc un terminal qui permette de réaliser la programmation d'un automate en utilisant un mode de représentation graphique qui consiste en la combinaison du mode de représentation "à contact" et d'un mode de représentation dit "séquentiel" qui est issu d'une méthode d'analyse consistant à décomposer le fonctionnement de la machine ou du processus à automatiser en une succession d'étapes et de transitions, toutes chaînées entre elles. A chaque étape est associée une liste d'actions qui sont exécutées lorsque cette étape est active.

Pour parvenir à ce résultat, le terminal selon l'invention comprend: un écran; un clavier comportant au moins un ensemble de touches de fonctions, un ensemble de touches affectées à des symboles graphiques et un ensemble de touches permettant d'introduire notamment des informations relatives à l'automatisme; et un processeur permettant d'effectuer la scrutation du clavier, la représentation graphique, à l'écran, d'au moins les symboles graphiques introduits au clavier, avec leurs paramètres utiles, le traitement des informations entrées sur le clavier, l'élaboration, à partir de ces informations d'un programme utilisable par l'automate et la mise en mémoire de ce programme.

Ce terminal est plus particulièrement caractérisé en ce qu'aux susdites touches graphiques sont affectés les symboles d'au moins un mode graphique de représentation de type à contact et un mode de représentation de type séquentiel, et en ce que le processeur est conçu de manière à pouvoir élaborer le programme de l'automate à la suite d'une séquence d'utilisation comprenant les phases suivantes:

- une première phase au cours de laquelle on réalise s'il y a lieu sur l'écran, en utilisant les touches correspondantes du clavier, une représentation de type "à contact" des sécurités et des modes de marche du processus;

- une deuxième phase au cours de laquelle on réalise sur l'écran, en utilisant les touches correspondantes du clavier, une représentation graphique de type "séquentiel" définissant l'enchaînement des étapes et des conditions de transitions de l'automatisme, et, éventuellement, immédiatement après la définition de chacune des transitions, une représentation de type à contact des réceptivites associées à cette transition, et

- une troisième phase au cours de laquelle on réalise sur l'écran, à l'aide des touches correspondantes, une représentation graphique de type "à contact", définissant les actions de l'automatisme qui doivent être exécutées lorsque les étapes qui leur sont associées sont actives.

De façon plus précise le processeur peut effectuer la mise en mémoire du programme source sous une forme utilisable par l'automate dans une mémoire vive (RAM) intégrée au terminal et pouvant être éventuellement lue par l'automate (connexion directe du terminal). Il peut également être conçu de manière à permettre la mémorisation du programme source dans une mémoire morte telle qu'une bande magnétique, une disquette ou même des mémoires programmables de type PROM ou EPROM. Il peut en outre comprendre des interfaces permettant la liaison à une imprimante ou même à un modem.

Bien entendu, l'invention ne se limite pas aux seules touches du clavier précédemment mentionnées. Ce dernier peut plus particulièrement comprendre:

a) Un clavier alphabétique, par exemple de type QWERTY, dont les touches comportent, selon une première fonction les lettres majuscules de l'alphabet, ou selon une deuxième fonction (Shift) les caractères de ponctuation, les signes, crochets, etc..., avec utilisation de la touche Shift; ce clavier alphabétique peut en outre comprendre des touches de fonctions spéciales, par exemple, une touche (SH) autorisant la deuxième fonction des touches alphabétiques (Shift); une touche (RC) pour le retour du curseur en début de ligne; des touches (SH) et (RC) pour le retour à la ligne; une touche (SP) pour créer un espace blanc; des touches (ON) et (OFF) pour la mise sous tension ou hors tension du terminal; une touche (a) autorisant ou inhibant le signal sonore indiquant des erreurs; et une touche (PR) commandant la copie de l'écran sur une imprimante connectée au terminal.

b) Un clavier numérique comprenant dix touches numériques (de 0 à 9), la virgule et une touche (ENT) pour valider en mémoire les instructions entrées sur le clavier.

c) Des touches de fonction pouvant comprendre une touche (ZM) destinées à faire apparaître le curseur ou pour agrandir le symbole pointé par le curseur, par exemple pour visualiser la référence d'un contact ou d'une bobine, les paramètres d'un bloc fonction ou encore, pour visualiser le diagramme séquentiel associé à une macroétape qui représente une succession de plusieurs étapes; quatre touches portant des flèches orientées, haut, bas, droite, gauche, qui servent à assurer le déplacement du curseur sur l'écran, si le curseur est présent ou pour obtenir le défilement sur l'écran des informations mémorisées, dans le cas où le curseur n'est pas présent; une touche (INS) permettant d'effectuer une insertion à l'écran; une touche (CLR) servant à annuler la validation mémoire de l'écran et qui permet de remonter d'un niveau l'enchaînement des écrans; et une touche (QU) permettant de quitter le niveau affiché pour remonter au premier écran du chaînage.

d) Les susdites touches graphiques.

Il convient de noter que les touches graphiques peuvent être réparties en deux claviers distincts, à savoir un clavier pour le mode de représentation graphique à contact et un clavier pour le mode de représentation graphique séquentiel.

Toutefois, selon une autre caractéristique de l'invention, ces touches graphiques sont des touches dynamiques, c'est-à-dire des touches associées à des configurations, à des symboles et à des fonctions qui varient selon le contexte d'utilisation du terminal. Dans ce cas le processeur est conçu de manière à afficher sur l'écran, de préférence au niveau de sa ligne inférieure une zone (ligne de visualisation) qui permet d'identifier les fonctions de chaque touche pour un contexte d'utilisation donné. De telles touches dynamiques sont connues en soi des documents GB-A-2 111 266 et "Byte" vol. 8, no 6, juin 1983, pages 282 - 286.

Il convient de noter que cette ligne de visualisation qui sert à représenter les symboles graphiques affectés aux touches dynamiques pour les deux modes de représentation graphiques précédemment mentionnés, peut en outre servir à afficher les différents "menus" ou "sous menus" qui permettent de faire passer le terminal d'un type de fonctionnement à un autre ou d'un menu à un autre. A cet effet, la ligne de visualisation affiche pour chacune des configurations proposées par un "menu" déterminé, un symbole de préférence mémotechnique correspondant à une touche.

Le processeur peut en outre être conçu pour diviser l'écran du terminal en cinq zones, à savoir, une zone de visualisation, un bandeau de visualisation des adresses, une zone évènement, une zone état de l'automatisme et la ligne de visualisation précédemment mentionnée.

La zone de visualisation peut servir à l'affichage de multiples informations. Elle sert en particulier à la représentation graphique de l'automatisme.

Ainsi dans le cas d'un mode de représentation à contact elle peut contenir:

- soit n lignes de m contacts d'entrée et une bobine de sortie, les connexions horizontales ou verticales entre contact pouvant figurer en pointillé,
- soit les blocs de fonction et leurs paramètres.

Dans le cas d'un mode de représentation séquentiel, la zone de visualisation permet de contenir les étapes et les transitions du diagramme séquentiel.

Le bandeau de visualisation des adresses permet de visualiser les références des contacts, bobines et blocs de fonction affichés à l'écran.

La zone évènement comporte jusqu'à trois caractères:

F: présence d'un ou plusieurs bits forcés,

!: présence d'un défaut dans le terminal ou l'automate, ce caractère pouvant clignoter en cas d'un nouveau défaut.

A: ce caractère s'allume et éventuellement clignote en cas de manipulation dangereuse pour certaines marches manuelles.

L'action sur la touche Zoom avec le curseur positionné sur l'un des trois caractères provoque l'affichage sur l'écran de:
- la liste des bits forcés
- la liste des bits actifs
- un message indiquant la manipulation dangereuse.

La zone état de l'automate peut comprendre les trois indications suivantes: RUN (marche), STOP (arrêt), TEST.

Comme il a été précédemment mentionné, le processeur du terminal est conçu de manière à reconnaitre et à utiliser les symboles du mode de représentation graphique "à contact" qui interviennent notamment dans le combinatoire d'entrée, dans le combinatoire de sortie et dans la représentation des réceptivités associées aux transitions du mode de représentation graphique de type séquentiel.

En conséquence, le processeur peut en outre être conçu, sans que cela implique des transformations importantes du terminal, pour permettre la réalisation d'automatisme uniquement à l'aide du mode de représentation "à contact".

Ce mode d'utilisation peut être sélectionné grâce aux fonctions "menu" affectées aux susdites touches dynamiques.

Un mode de réalisation de l'invention sera décrit ci-après, à titre d'exemple non limitatif, avec référence aux dessins annexés dans lesquels:

La figure 1 représente schématiquement une installation comprenant un terminal connecté à un automate assurant la commande d'un processus et à des périphériques;

La figure 2 est une vue de face, à plus grande échelle du terminal représenté figure 1;

La figure 3 est une représentation schématique de l'écran du terminal avec ses divisions;

La figure 4 est un schéma représentant l'architecture matérielle du processeur;

La figure 5 représente schématiquement une machine destinée à réaliser le perçage et la découpe de barreaux métalliques;

La figure 6 est un schéma de type à contact de l'automatisme destiné à piloter la machine représentée figure 5;

Les figures 7a à 7l sont des vues schématiques de l'écran du terminal permettant d'illustrer le mode opératoire d'une saisie selon le mode de représentation graphique "à contact" de l'automatisme affecté à la machine représentée figure 5;

Les figures 8a à 8e sont des représentations schématiques permettant d'illustrer le principe d'un diagramme de type séquentiel;

La figure 9 est un schéma permettant d'illustrer le principe du mode de représentation fonctionnel;

Les figures 10a à 10d sont des vues de l'écran du terminal illustrant les principales phases opératoires préliminaires en vue d'effectuer la saisie selon le mode de représentation graphique de type fonctionnel;

Les figures 11a à 11i sont des vues schématiques de l'écran du terminal permettant d'illustrer le mode opératoire d'une saisie selon le mode séquentiel graphique.

La figure 12 est le schéma du séquentiel graphique de l'automatisme affecté à la machine représentée figure 5;

Les figures 13a à 13h sont des vues schématiques de l'écran du terminal permettant d'illustrer le mode opératoire de la saisie du séquentiel graphique représenté figure 12;

La figure 14 est le schéma du combinatoire de sortie de l'automatisme, en mode de représentation graphique à contact.

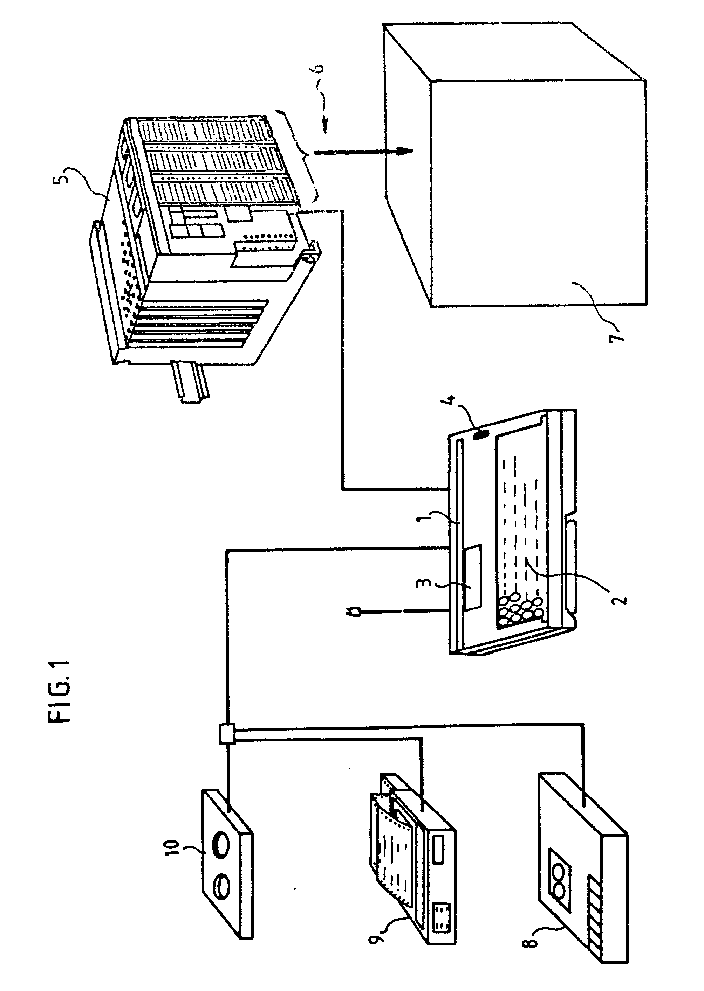

Avec référence à la figure 1, la susdite installation comporte tout d'abord un terminal 1 incorporant dans un même boîtier, un clavier 2 et un écran à affichage par cristaux liquides (L.C D.) 3 dont le contraste peut être réglé par une molette 4. Bien entendu, l'écran 3 pourrait être indépendant du boîtier du terminal et pourrait consister en un moniteur à tube cathodique.

Ce terminal 1 se trouve raccordé, par exemple par une liaison série, au processeur d'un automate de type classique 5 dont les entrées et les sorties 6 peuvent être agencées en plusieurs modules disposés dans plusieurs bacs. Dans ce cas, pour faciliter l'adressage, ces entrées et ces sorties peuvent être référencées de la manière suivante:

I x y, z pour une entrée

O x y, z pour une sortie

expressions dans lesquelles:
- les lettres I et O indiquent qu'il s'agit d'une entrée ou d'une sortie,
- la lettre x est remplacée par le numéro du bac,
- la lettre y est remplacée par le numéro d'emplacement du module dans le bac,
- la lettre z est remplacée par le numéro de l'entrée ou de la sortie (bit) dans le module.

L'automate 5 se trouve raccordé par ses entrées, aux éléments de détection du processus 7 et, par ses sorties, aux différents éléments commandés (actionneurs) du processus 7. Il comprend en outre un dispositif de connexion permettant de brancher une cartouche de mémoire morte contenant le programme spécifique de l'automatisme qui assure la commande du processus. Cette cartouche peut comprendre une ou plusieurs mémoires programmables par l'utilisateur, par exemple de type PROM ou EPROM.

Tel que représenté sur la figure 1, le terminal 1 se trouve en outre raccordé:

- à un lecteur-enregistreur de cassettes numériques 8 pour la sauvegarde du programme source élaboré par le terminal 1 ou également le chargement de la mémoire vive du terminal;

- une imprimante 9, de type classique;

- un modem 10 (modulateur-démodulateur) utilisable pour assurer des communications à distance par l'intermédiaire d'une ligne téléphonique.

Le terminal 1 peut en outre comprendre un dispositif de connexion permettant de brancher des cartouches de mémoire morte, à savoir, notamment:

- des cartouches de programmation et de réglage permettant la programmation de l'automate à l'aide du terminal;

- des cartouches de réglage qui permettent d'assurer les fonctions de réglage et de test de l'automate;

- des cartouches utilisateur destinées à contenir le programme spécifique de la machine ou du processus à automatiser et qui sont, en exploitation, connectées directement à l'automate.

Un programmeur de mémoire programmable (EPROM) est par ailleurs incorporé dans le terminal de manière à permettre le transfert du contenu de la mémoire vive du terminal dans la cartouche de mémoire morte (programmable) branchée sur le terminal.

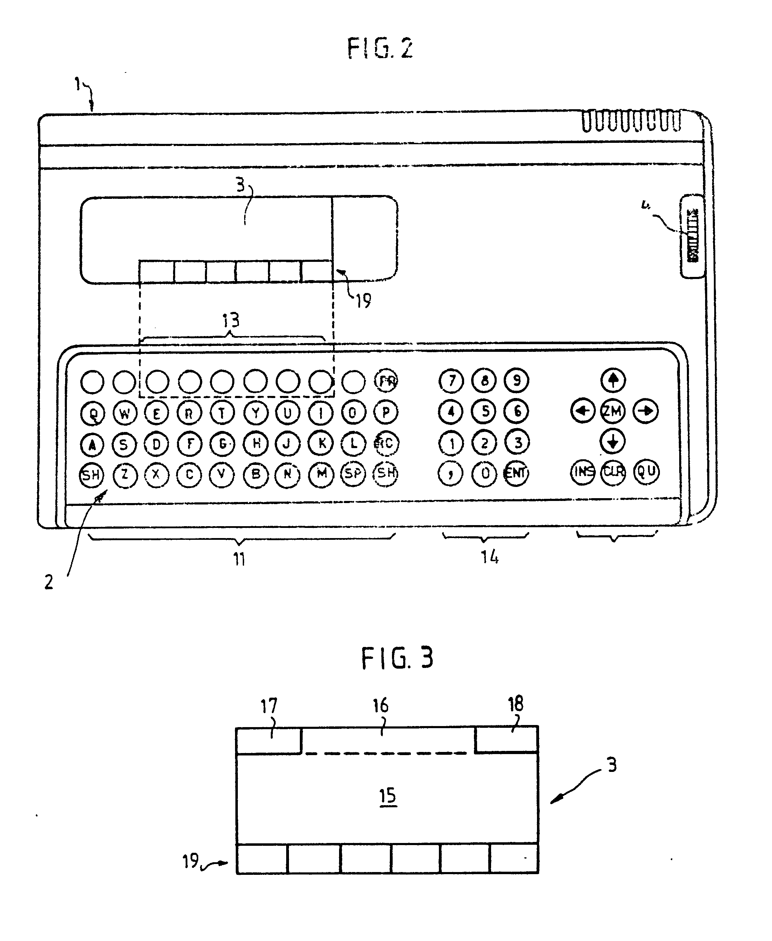

Comme précédemment mentionné, le clavier du terminal comporte (figure 2):

- un clavier alphabétique classique 11 de type QWERTY incorporant des touches de fonctions spéciales SH, RC, SP, ON, OFF et PR. La première ligne de ce clavier comprend en outre six touches dynamiques 13 dont les symboles auxquels elles se trouvent affectées sont visualisés à l'écran 3 et varient selon le mode opératoire du terminal 1,

- un clavier numérique 14 comportant la virgule et une touche ENT,

- des touches de fonctions comprenant les touches ↑ ↓ → ← une touche ZM, une touche INS; une touche CLR et une touche QU.

En ce qui concerne l'écran du terminal, il convient de noter que sa découpe par le processeur n'est pas figée et dépend du mode de fonctionnement et de la commande en cours.

Toutefois dans la plupart des modes d'utilisation du terminal, l'écran se trouve divisé en cinq zones comme représenté figure 3 à savoir:

- la zone de visualisation 15,

- le bandeau de visualisation 16,

- la zone évènement 17,

- la zone état de l'automate 18, et

- la ligne de visualisation 19 des symboles des six touches dynamiques qui se trouve avantageusement située au-dessus desdites touches dynamiques 13.

Les affectations de ces cinq zones ont déjà été fournies et ne seront donc pas décrites à nouveau. Il convient de noter cependant que dans la suite de la description, la zone de visualisation 15 comprend, dans le mode de représentation "à contact" quatre lignes de neuf contacts d'entrée et une bobine de sortie.

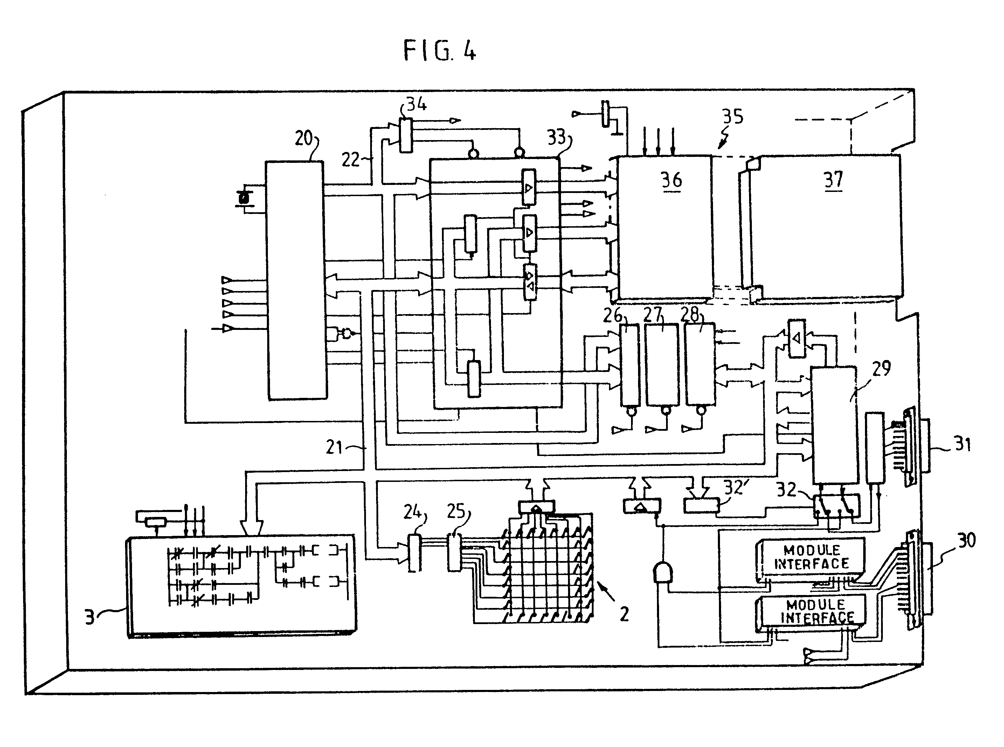

Avec référence à la figure 4 le processeur du terminal 1 comprend un microprocesseur 20, par exemple un NSC 800 de la Société Nationale semi-conducteur ou un 8085 de la Société INTEL, duquel partent un bus des données 21 et un bus des adresses 22.

Le bus des données 21 se trouve plus particulièrement connecté:

- à l'afficheur à cristaux liquides (LCD) constituant l'écran 3 du terminal;

- à l'entrée du clavier 2 par l'intermédiaire d'un loquet (latch) 24 destiné à préserver les informations destinées au clavier 2 et présentées temporairement sur le bus 21, et par l'intermédiaire d'un décodeur 25; la sortie du clavier 2 se trouve connectée unidirectionnellement sur le bus 21;

- à un ensemble composé de trois blocs de mémoire vive RAM 26, 27, 28;

- à un récepteur-émetteur universel asynchrone 29 (UART) présentant une entrée parallèle raccordée aux conducteurs du bus 21 et une sortie séquentielle raccordée aux connecteurs antérieurs (liaison automate ou périphériques) 30, 31 du terminal 1, par l'intermédiaire d'un commutateur 32 piloté à partir des informations générées sur le bus 21 par l'intermédiaire d'un loquet (latch) 32';

et, par l'intermédiaire d'un circuit de commutation 33 piloté à partir des informations générées par le Bus des adresses 22 et décodées par un décodeur 34, à un ensemble de mémorisation 35 pouvant comprendre une mémoire morte 36 (ROM ou EPROM), une mémoire morte enfichable 37 par exemple de type PROM ou EPROM et éventuellement, un programmeur de PROM ou d'EPROM.

Le Bus des adresses 22 se trouve quant à lui connecté:

- au décodeur 34 effectuant la commande du circuit de commutation 33;

- à l'ensemble de mémorisation 35, par l'intermédiaire du circuit de commutation 33, et

- à l'ensemble composé des trois mémoires vives 26, 27, 28.

Comme précédemment mentionné, la réalisation d'un automatisme à l'aide du terminal 1 s'effectue à l'aide des modes de représentation graphiques "à contact" et "séquentiel". Les principales caractéristiques de ces deux modes de représentation graphiques seront donc décrites ci-après:

**Mode de représentation graphique à contact**

La représentation graphique de type à contact fait intervenir des symboles représentatifs des contacts d'entrée (référence des entrées I x y, z de l'automate) et des bobines de sortie (référence des sorties O x y, z de l'automate).
- le symbole

$$I \ x \ y, \ z$$
$$—|\ \ |—$$

représente un contact à fermeture qui est passant quand le signal d'entrée qui le pilote I x y, z est à l'état 1.
- le symbole

$$I \ x \ y, \ z$$
$$—|/|—$$

représente un contact à ouverture qui est passant quand le signal d'entrée qui le pilote I x y, z est à l'état O.
- le symbole

$$O \ x \ y, \ z$$
$$—( \ )—$$

représente une bobine directe dont la sortie est à l'état 1 quand la ligne de contact qui la commande est passante (à l'état 1).
- le symbole

$$O \ x \ y, \ z$$
$$—(\nearrow)—$$

représente une bobine inverse dont la sortie est à l'état O quand la ligne de contact qui la commande est passante (à l'état 1).
- le symbole

$$O \ x \ y, \ z$$
$$—(L)—$$

représente une bobine d'enclenchement (latch). La sortie de cette bobine passe à l'état 1 dès que la ligne de contact qui la commande est passante. Cette sortie reste à l'état 1 tant qu'elle n'est pas remise à zéro par la bobine de déclenchement ayant la même référence.
- le symbole

$$O \ x \ y, \ z$$
$$—(U)—$$

représente une bobine de déclenchement (Unlatch); la sortie de cette bobine passe à l'état zéro dès que la ligne de contact qui la commande est passante. Cette sortie reste à l'état O tant qu'elle n'est pas remise à 1 par la bobine d'enclenchement ayant la même référence.
- le symbole

$$n° \ de \ réseau$$
$$——(J)——$$

représente un saut de programme. Quand la ligne d'action de cette bobine est passante, le programme saute au réseau aval référencé immédiatement après lecture de cette bobine.
- le symbole

$$O \ x \ y, \ z$$
$$—( \ )—$$

représente une sortie sauvegardée. La sortie "O x y, z" reprendra, après coupure du secteur l'état qu'elle avait immédiatement avant (0 ou 1). Toutes les sorties peuvent être sauvegardées. Les sorties non sauvegardées resteront à 0 après coupure du secteur.

Le mode de représentation graphique à contact fait en outre intervenir des symboles représentatifs d'éléments ayant des fonctions particulières tels que des temporisateurs, des compteurs, des programmateurs, des registres à décalage, des opérateurs arithmétiques ou logiques etc...

Ces symboles sont représentés sous la forme de blocs rectangulaires présentant une ou plusieurs entrées et une ou plusieurs sorties. Le type de fonction affecté à ce bloc est indiqué par une lettre inscrite à l'intérieur du bloc:

T Temporisation
C Compteur
M Monostable
R Registre
"rien" fonction arithmétique ou logique.

Les paramètres relatifs à ces fonctions spéciales sont introduits dans le terminal immédiatement après le bloc, mais ne s'inscrivent pas sur le réseau.

Ainsi, pour connaître ensuite les paramètres propres du bloc fonction, il convient de réaliser les opérations suivantes:
- Appuyer sur la touche Zoom (ZM) pour visualiser le curseur.
- Placer le curseur en haut et à gauche du bloc en utilisant les touches fléchées.
- Appuyer sur la touche Zoom (ZM) pour faire apparaître le bloc sur l'écran entier 3 avec tous ses paramètres. En mode programmation ou réglage, le curseur se déplace automatiquement de zone en zone pour définir ou modifier chaque paramètre.

En réappuyant sur la touche Zoom (ZM), l'écran du réseau complet réapparaît.

Un exemple d'exécution d'un automatisme élaboré à l'aide d'une représentation graphique de type à contact sera décrit ci-après.

### Exemple I

Dans cet exemple le processus à automatiser consiste en une machine servant à réaliser le perçage et la découpe de barreaux métalliques.

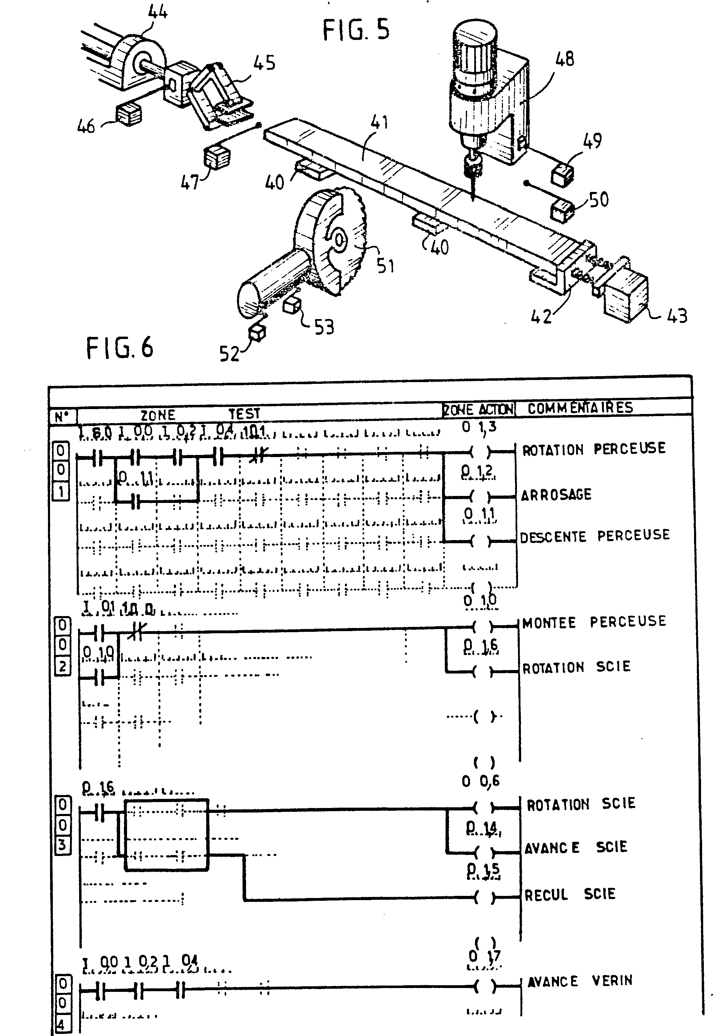

Telle que représentée sur la figure 5, cette machine comprend plus particulièrement:
- un support 40 sur lequel peuvent être disposées des barres métalliques 41;
- une butée 42 sur laquelle peut venir s'appliquer une extrémité de la barre 41, cette butée 42 étant équipée d'un capteur "barre en butée" 43 (I 0,4);
- un vérin 44 équipé d'un mécanisme de préhension 45 pour déplacer la barre 41 axialement en translation, les positions fin de course avant et fin de course arrière de ce vérin 44 étant respectivement détectées par des capteurs 46, 47 "vérin arrière", "vérin avant";
- une perceuse 48 mobile verticalement au-dessus de la barre 41, cette perceuse 48 comprenant des moyens pour commander sa rotation, sa montée et sa descente;
- des moyens (non représentés) permettant la commande de l'arrosage pendant le perçage;
- deux capteurs 49, 50 permettant de détecter le point haut (I 0,0) et le point bas (I 0,1) de la perceuse 48;
- une scie circulaire 51 mobile transversalement par rapport à la barre 41, cette scie 51 comprenant des moyens pour commander sa rotation, son arrêt, son avance et son recul;
- deux capteurs 52, 53 permettant de détecter les positions fin de course avant et fin de course arrière de la scie 51.

Le déroulement séquentiel des opérations effectuées par cette machine doit être le suivant:
- la barre 41 disposée sur le support 40 est poussée sur la butée 42 par action du vérin hydraulique 44;
- la perceuse 48 entame sa descente avec rotation du foret avec arrosage simultané. Quand la perceuse 48 arrive en position basse I 0,1, elle remonte. La rotation et l'arrosage sont alors stoppés;
- dès que la perceuse 48 remonte, la scie 51 est mise en rotation, puis avance jusqu'à être en butée fin de course avant I 0,3, position dans laquelle elle s'immobilise pendant un temps "t" pour effectuer l'ébavurage. Puis elle retourne en arrière I 0,2 et s'arrête;
- en fin de cycle le barreau 41 usiné est éjecté, un nouveau cycle peut recommencer.

Le premier stade en vue de l'élaboration de l'automatisme consiste en l'affectation des entrées/sorties de l'automate 5 en utilisant le mode d'adressage précédemment décrit (I x y, z pour les entrées, O x y, z pour les sorties). Le tableau I suivant montre un exemple d'affectation:

**Tableau I**

Affectation : action ou détection
I 0,0 : perceuse 48 en haut
I 0,1 : perceuse 48 en bas
I 0,2 : scie 51 en arrière
I 0,3 : scie 51 en avant
I 0,4 : barre 41 en butée
I 2,0 : commutateur de marche automatique
O 1,0 : montée perceuse 48
O 1,1 : descente perceuse 48
O 1,2 : arrosage perceuse 48
O 1,3 : rotation perceuse 48
O 1,4 : avance scie
O 1,5 : recul scie 51
O 1,6 : rotation scie 51
O 3,0 : avance vérin 44
O 3,1 : recul vérin 44

La figure 6 montre la représentation graphique de type à contact de l'automatisme, cette représentation étant exécutée en manuscrit sur un formulaire spécialement conçu à cet effet.

Cette représentation comprend quatre groupes de lignes de contact appelés réseaux, qui sont numérotés (001, 002, 003, 004) à gauche de la figure. Un réseau est un ensemble de une à quatre lignes de contacts en parallèle ayant ou non des connexions verticales entre elles.

Sur ces réseaux, les organes d'entrée de commande (boutons poussoirs, interrupteurs...) sont symbolisés sous forme de contacts de relais. Ils sont tous regroupés dans la partie gauche des lignes de contact (zone test) et peuvent être au maximum neuf en série par ligne. Ils sont référencés I 0,0 à I 2,0 dans cet exemple.

Les organes de commande (moteurs, bobines de relais...) sont représentés sous forme de bobines, obligatoirement représentées dans la colonne de droite du schéma à relais, qui constitue la zone action. Ces bobines sont référencées O 1,0 à O 3,1 dans cet exemple.

La fonction temporisation (réseau 003) est représentée par un bloc fonction ayant deux lignes en entrée et en sortie. L'élaboration de l'automatisme précédemment défini au moyen du terminal peut alors s'effectuer comme suit:

Un introduit dans le terminal un programme source conçu pour élaborer le programme de l'automate à partir du mode de représentation graphique à contacts. Ceci peut par exemple être réalisé par insertion d'une cartouche de programmation (ROM, EPROM) dans le système de connexion prévu à cet effet. On raccorde ensuite le terminal à l'automate pour une utilisation en ligne.

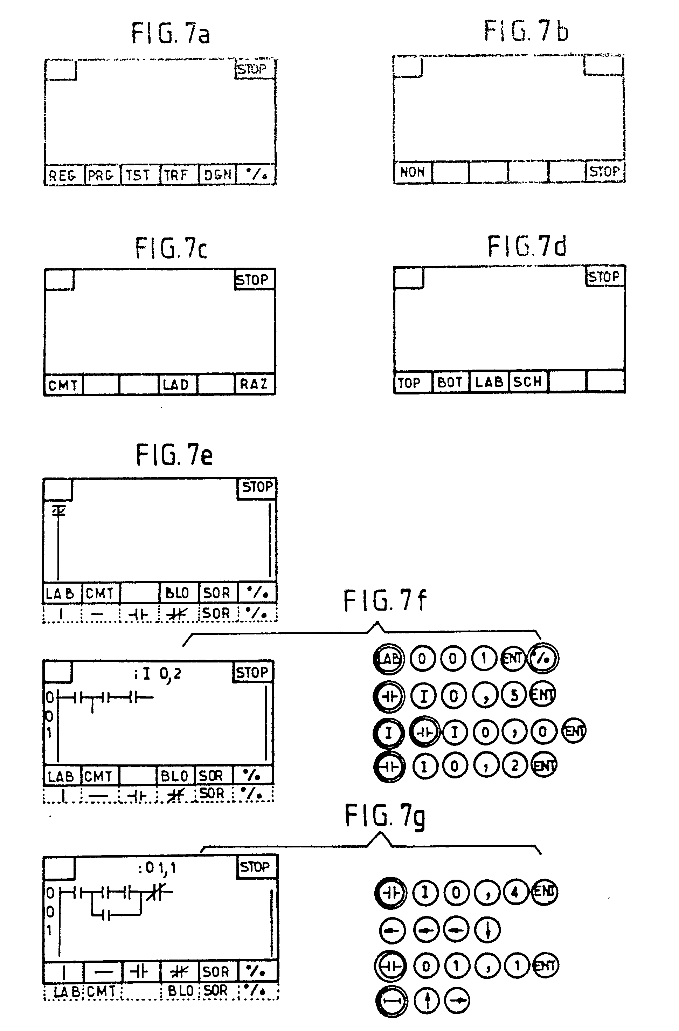

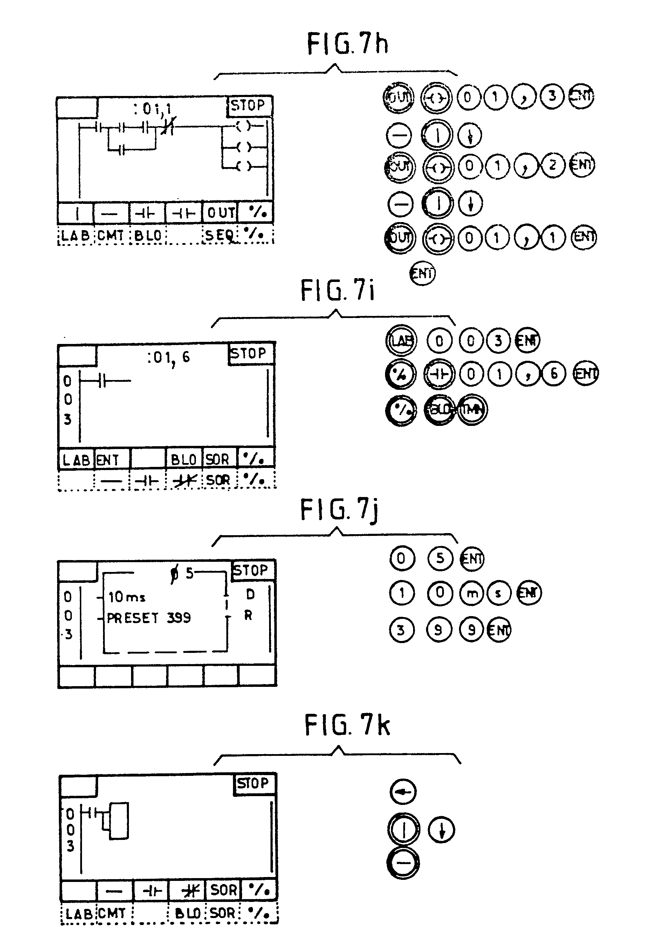

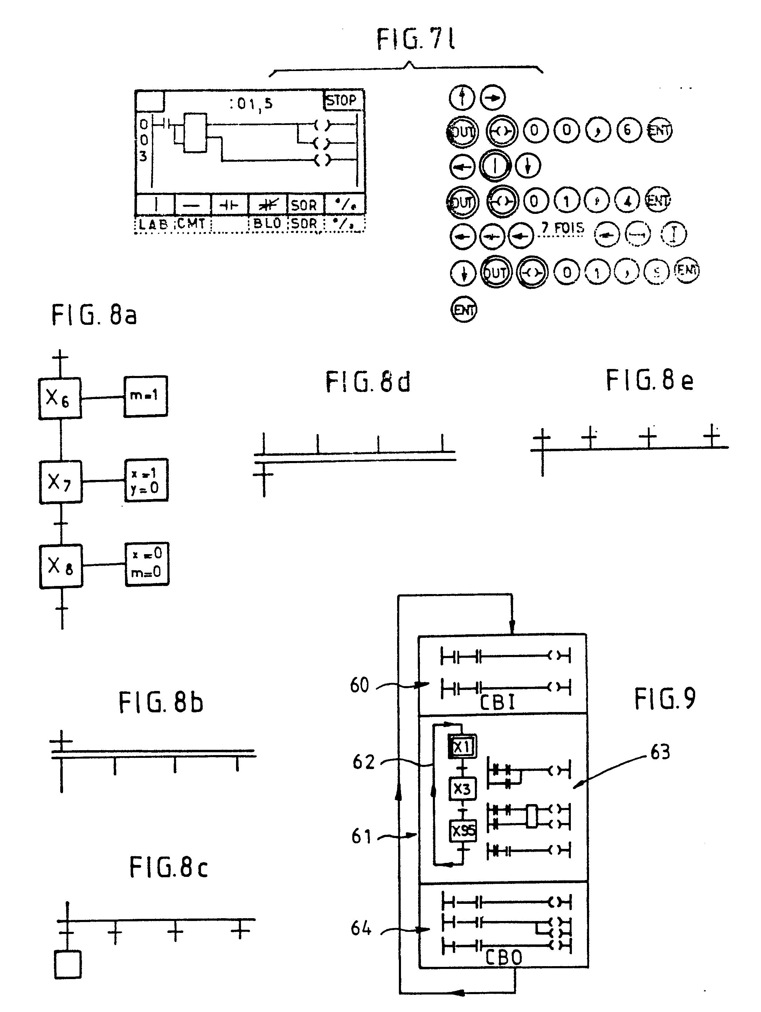

Le terminal effectue alors une série d'auto-tests, identifie automatiquement le type d'automate connecté, puis effectue l'affichage d'un écran de connexion tel que celui représenté sur la figure 7a. Sur cet écran, la ligne de visualisation affecte aux touches dynamiques des symboles mémotechniques constituant un premier menu, à savoir:

    Le symbole:
    REG - Réglage
    PRG - Mode programmation
    TST - Test
    TRF - Transfert
    DGN - Diagnostic
    % - Deuxième fonction des touches dynamiques (Shift)

Pour entrer en mode programmation, on utilise donc la touche dynamique PRG. La programmation en ligne se fait sur un automate à l'arrêt. Si l'automate est en cours d'exécution de programme, le terminal le signale et donne la possibilité de l'arrêter pour entrer en mode programmation. A cet effet, on appuie sur la touche dynamique STOP qui est apparue sur la ligne de visualisation à la suite de l'action sur la touche dynamique PRG (figure 7b).

Si l'automate est à l'arrêt, l'écran représenté sur la figure 7c selon lequel la ligne de visualisation, affiche les symboles suivants:

    CMT - Commentaire
    LAD - Programmation par représentation "à contacts"
    RAZ - Remise à zéro.

On appelle ensuite la programmation par représentation "à contacts" avec la touche dynamique LAD. On obtient ainsi un écran tel que celui représenté sur la figure 7d dans lequel la ligne de visualisation affiche les symboles suivants:

    TOP - Début
    BOT - Fin
    LAB - Etiquette
    SCH - Recherche

Pour créer un nouveau réseau de contact, on doit appuyer sur la touche INS (touche de fonction du clavier). Un réseau vierge apparaît (figure 7e) avec, dans la ligne de visualisation, les principaux symboles graphiques du mode de représentation à contact (contact, bobines etc...). Le curseur est présent en haut à gauche de l'écran.

La saisie du premier réseau (001) de la figure 5 peut alors s'effectuer comme suit:

On introduit tout d'abord l'étiquette du premier réseau au moyen des touches (LAB) (O) (0) (1) (ENT) puis le premier contact et sa référence par les touches (%)

**( ⊣ ⊢ )**

(I) (2) (,) (0) (ENT). La connexion verticale et le 2ème contact s'obtiennent au moyen des touches (I)

**( ⊣ ⊢ )**

(I) (0) (,) (0) (ENT), le troisième contact et sa référence au moyen des touches

**( ⊣ ⊢ )**

(I) (0) (,) (2) (ENT) (figure 7f) et le quatrième contact et sa référence, au moyen des touches

**( ⊣ ⊢ )**

(I) (,) (4) (ENT).
Pour réaliser la saisie du contact en parallèle, on procède tout d'abord à la saisie du 4ème contact en série au moyen des touches

**( ⊣ ⊢ )**

(I) (0) (,) (4) (ENT). On ramène le curseur au bas de la connexion verticale précédemment tracée au moyen des touches (←) (←) (←) (↓). On trace le contact en parallèle au moyen des touches

**( ⊣ ⊢ )**

(0) (1) (,) (1) (ENT) puis on réalise les connexions horizontale et verticale au moyen des touches

**( ⊢⊣ )**

(↑) (→) (figure 7g). Les bobines de la zone action peuvent ensuite être saisies, comme représenté sur la figure 7h:
On effectue tout d'abord une première connexion verticale et on saisit la première bobine au moyen des touches (OUT)

**( ⊣ ⊢ )**

(0) (1) (,) (3) (ENT).
On positionne le curseur au moyen des touches (←) (/) (↓), on effectue une connexion verticale et on saisit la 2ème sortie au moyen des touches (OUT)

**( ⊣ ⊢ )**

(0) (1) (,) (2) (ENT).
On positionne le curseur au moyen des touches (←) (/) (↓) puis on saisit la troisième sortie, au moyen des touches (OUT)

( ⊣ ⊢ )

(0) (1) (,) (1) (ENT).

Le réseau ainsi réalisé peut alors être validé en appuyant sur la touche (ENT).

La saisie des deuxième et quatrième réseaux s'effectue d'une façon analogue à la précédente et ne sera pas par conséquent décrite.

Le troisième réseau de l'automatisme représenté figure 6 inclut un bloc représentatif de la fonction temporisation. Pour réaliser ce réseau on crée tout d'abord le circuit situé avant le bloc, de la façon représentée figure 7i. Préalablement, on introduit l'étiquette du réseau au moyen des touches (LAB) (0) (0) (5) (ENT); on saisit le premier contact et sa référence par les touches (%)

( ⊣ ⊢ )

(0) (1) (,) (6) (ENT) puis on appelle le bloc de temporisation au moyen des touches (8) (BLO) (TMN).

Le bloc de temporisation apparaît alors à l'écran (figure 7j) sous la forme d'un rectangle présentant deux entrées et deux sorties. On introduit ensuite les paramètres du bloc, à savoir:
- le numéro de temporisation par les touches (0) (5) (ENT)
- la base de temps de 10 ms par les touches (1) (0) (M) (S) (ENT)
- la valeur de présélection: 399 par les touches (3) (9) (9) (ENT).

La connexion de la 2ème entrée du bloc de temporisation s'obtient en positionnant le curseur, touche (←), en introduisant la connexion verticale, touches (I) (↓) et en réalisant la connexion horizontale, touche (—) (figure 7k). Il ne reste alors plus qu'à effectuer la saisie des sorties.

A cet effet, comme illustré figure 7l,
- On positionne le curseur au moyen des touches (↑) (→);
- On introduit la première sortie et sa référence par les touches (OUT)

( ⊣ ⊢ )

(0) (0) (,) (6) (ENT);
- On recule le curseur et on réalise la connexion verticale au moyen des touches (←) (/) (↓);
- On introduit la deuxième sortie et sa référence au moyen des touches (OUT)

( ⊣ ⊢ )

(0) (1) (,) (4) (ENT);
- On recule le curseur et on réalise la connexion verticale par la touche (←) répétée sept fois, la touche (—) et la touche (I);

- On introduit la troisième sortie et sa référence, au moyen des touches (↓) (OUT)

( ⊣ ⊢ )

(0) (1) (,) (5) (ENT)
- et on peut ensuite procéder à la validation du réseau entier, à nouveau avec la touche (ENT).

Une fois toutes ces opérations effectuées, le terminal possède en mémoire dynamique le programme source de l'automate. Toutefois, dans la pratique il convient d'effectuer une mise au point de ce programme notamment en détectant et en corrigeant les erreurs qui ont pu survenir au cours de la saisie des réseaux.

A cet effet, on revient au premier réseau, à l'aide des touches dynamiques (SCH) (TOP) puis on vérifie que ce premier réseau est correct. On fait ensuite apparaître le réseau aval avec la touche (↓) et ainsi de suite...

Si, par exemple, une erreur existe au 2ème réseau: un contact à fermeture a été introduit à la place du contact à fermeture I 0,1.

On fait alors apparaître le curseur en appuyant sur la touche ZOOM (ZM). On positionne le curseur sur le contact à modifier avec les touches (↓) (→) (→), on écrit à nouveau le bon contact et sa référence au moyen des touches

( ⊣⊣ )

(I) (0) (,) (1) (ENT), puis on valide le réseau corrigé par la touche (ENT).

On peut ensuite vérifier les autres réseaux de l'automatisme d'une façon analogue.

Le programme ayant été vérifié, on peut passer en mode exécution par action sur la touche (CLEAR).

L'automate peut alors comprendre un voyant lumineux permettant d'indiquer que le programme est en cours d'exécution. Simultanément, le mot RUN apparaît dans la zone état située en haut à droite de l'écran du terminal.

Pour vérifier la bonne exécution du programme on peut simuler le cycle de la machine en positionnant dans l'ordre de fonctionnement les différents capteurs. Si l'automate ne peut être raccordé à la machine ou à une maquette de machine, on peut simuler les différents capteurs à l'aide d'interrupteurs raccordés aux entrées.

La documentation et l'archivage du programme élaboré par le terminal ou de la représentation graphique de l'automatisme introduite à l'écran peuvent s'effectuer de la manière suivante:
- soit par impression du programme et/ou de sa représentation graphique avec l'imprimante qui se trouve raccordée au terminal;
- soit par transfert du programme stocké sur la mémoire vive RAM du terminal, sur une cartouche de mémoire morte (EPROM) à l'aide du programmateur d'EPROM intégré au terminal.

## Mode de représentation graphique de type fonctionnel.

D'une manière générale on sait que tout processus industriel peut être découpé en une succession de tâches ou actions élémentaires bien définies. Cette analyse du processus et sa décomposition en sous ensemble de tâches consiste à créer un diagramme de type séquentiel.

Comme représenté sur la figure 8a, les tâches s'effectuent généralement dans un ordre déterminé et sont regroupées en étapes représentées par des blocs.

Chaque fin d'opération conditionne généralement le passage à l'étape suivante. Cette condition est appelée transition.

Les transitions indiquent les possibilités d'évolution entre étapes, une étape ne pouvant devenir active que si l'étape précédente est active. L'activation d'une étape entraîne la désactivation de l'étape précédente.

A une étape peuvent succéder plusieurs étapes en parallèle. Si ces étapes doivent être déclenchées simultanément, il s'agit d'une divergence en ET (figure 8b). Si chacune possède sa propre transition d'activation, c'est alors une divergence en OU (figure 8c).

De même plusieurs étapes parallèles peuvent converger vers une seule étape. Dans le cas d'une convergence en ET (figure 8d), il n'y a qu'une seule transition commune entre les étapes parallèles et l'étape suivante. Pour une convergence en OU (figure 8e) chaque étape parallèle a sa propre transition vers l'étape suivante.

Dans un automatisme complexe, plusieurs séquences ou groupes d'actions peuvent être simultanés et avoir des évolutions indépendantes. Dans ce cas, le diagramme séquentiel sera décomposé en plusieurs branches.

Comme précédemment mentionné, le terminal selon l'invention permet l'élaboration de programmes utilisables par un automate en utilisant un mode de représentation graphique qui combine le mode de représentation de type à contact avec un mode de représentation graphique de type séquentiel. Ce mode de représentation graphique, appelé ci-après mode fonctionnel, comprend trois phases, à savoir, le combinatoire d'entrée (CBI), la phase séquentielle (SEQ) et le combinatoire de sortie (CBO) (figure 9).

Le combinatoire d'entrée 60 consiste en la phase durant laquelle sont traitées toutes les sécurités du programme telles que coupure du secteur, chien de garde... et les sécurités liées aux modes de marche: manuelle, automatique etc... Certaines étapes peuvent être directement initialisées ou activées en cas d'événements particuliers. Cette phase est programmée en mode de représentation graphique à contact de la façon précédemment décrite.

La phase séquentielle est une phase essentielle qui permet de définir l'enchaînement étapes-transitions. La représentation graphique 61 de cette phase séquentielle s'effectue en deux temps.

a) Un premier temps au cours duquel on effectue une représentation de type séquentiel 62, analogue à celle représentée sur la figure 8a qui permet de définir l'enchaînement des étapes et des transitions. Une seule instruction est spécifique à ce diagramme fonctionnel : Il s'agit du bloc "Xi" identifiant l'étape d'indice "i" de sorte que chaque étape peut être décrite et rappelée de manière indépendante. Chaque transition est rattachée graphiquement à l'étape amont associée. Bien entendu le nombre d'étapes et de transitions se trouve limité selon la configuration du terminal et/ou de l'automate (par exemple à 96 étapes et à 96 transitions).

Les étapes initiales doivent être déclarées lors de leur saisie dans le programme: une étape est initiale si le programme y reste arrêté lorsque l'automate est mis sous tension.

Les étapes peuvent être chaînées, soit en séquences linéaires, soit en branches parallèles. Une divergence peut amorcer un nombre limité de branches parallèles, par exemple 6. Le nombre de divergences et de convergences en ET peut être limité par exemple à 16. Par contre le nombre de divergences et de convergences en OU peut ne pas faire l'objet d'une limitation.

b) Un deuxième temps au cours duquel les réceptivités 63 associées aux transitions sont représentées en langage à contacts. Ces réceptivités 63 peuvent être saisies sur l'écran, soit immédiatement après la définition de la transition associée, soit dans une phase ultérieure.

Le combinatoire de sortie 64 est une phase au cours de laquelle les actions liées à chaque étape sont définies selon le mode de représentation graphique à contact. A chaque étape Xi du graphique séquentiel 62 sont associés un ou plusieurs réseaux de contact représentatifs de toutes les actions à exécuter pendant l'activité de cette étape.

## Elaboration d'un automatisme au moyen du mode de représentation graphique de type fonctionnel.

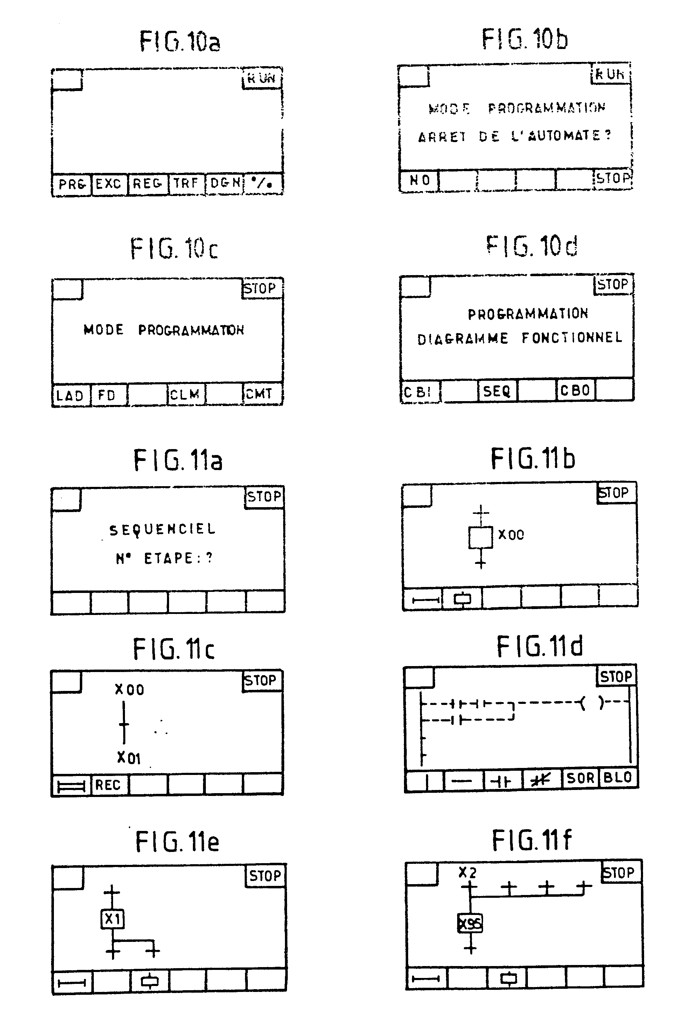

On procède tout d'abord aux opérations de branchement du terminal sur l'automate et à l'insertion des cartouches mémoire comme dans l'exemple précédemment décrit, de sorte que l'on obtient un écran de connexion (fig. 10a) du type de celui représenté figure 7a dans lequel la ligne de visualisation affecte aux touches dynamiques les symboles PRG (programme) EXC (Exécution) REG (réglage) TRF (Transfert) DGN (diagnostic) et % (Deuxième fonction des touches dynamiques (Shift)).

On sélectionne ensuite le mode programmation avec la touche dynamique PRG, ce qui fait apparaître l'écran représenté sur la figure 10b qui correspond à celui représenté sur la figure 7b.

Si le terminal est connecté en ligne avec un automate qui exécute un programme, on arrête son exécution en appuyant sur la touche STOP. Sinon on appuie sur la touche NO de manière à obtenir l'écran d'entrée en programmation représenté figure 10c.

Cet écran d'entrée en programmation visualise sur la ligne de visualisation, les quatre symboles suivants affectés aux touches dynamiques:

LAD - Représentation graphique de type à contact

FD - Représentation graphique de type fonctionnel

CLM - Effacement mémoire

CMT - Saisie du commentaire (limité par exemple à 5 caractères).

L'actionnement de la touche FD fait apparaître l'écran représenté sur la figure 10d dont la ligne de visualisation affiche les symboles permettant de choisir l'une des trois phases du diagramme fonctionnel:

CBI - Combinatoire d'entrée (représentation à contact)

SEQ - Séquentiel graphique

CBO - Combinatoire de sortie (représentation à contacts).

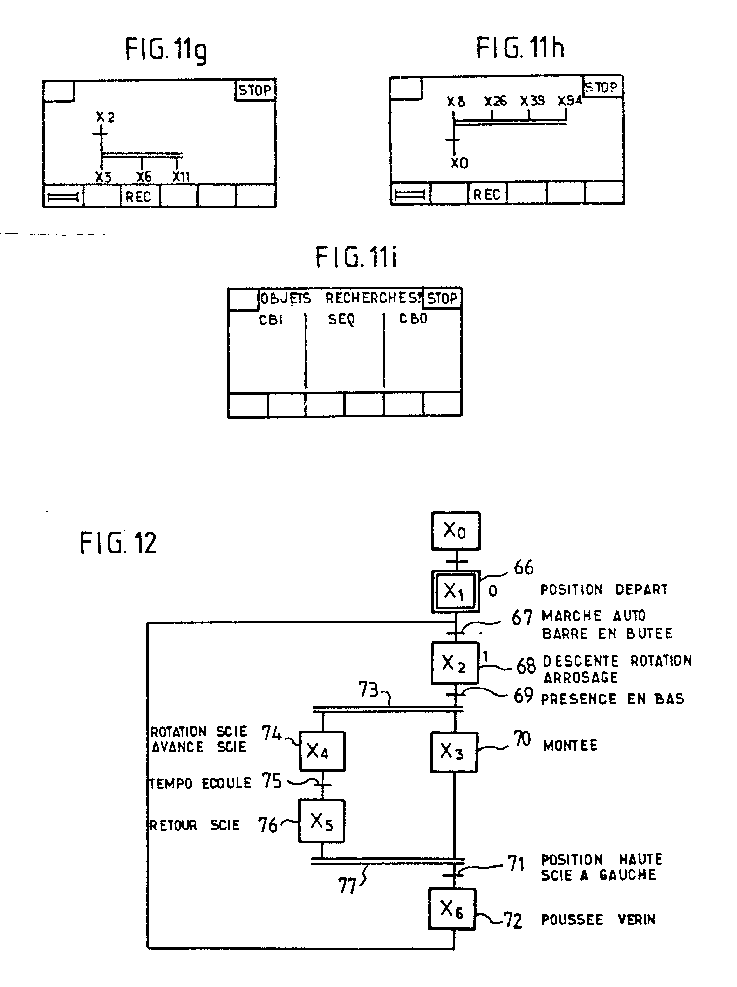

La saisie du combinatoire d'entrée et du combinatoire de sortie qui s'effectue en représentation graphique à contact s'effectue d'une manière analogue à celle précédemment décrite et ne sera donc pas à nouveau développée. L'entrée dans le mode séquentiel graphique s'obtient en appuyant sur la touche dynamique (SEQ) visualisée figure 10d. Cette touche fait apparaître l'écran représenté figure 11a qui demande le numéro de la première étape du séquentiel.

La saisie de ce numéro (par exemple entre 0 et 96) s'effectue grâce aux touches numériques et est ensuite validée par la touche (ENT).

On obtient ensuite l'écran représenté figure 11b qui visualise l'étape avec ses transitions amont et aval.

Sur cet écran, la ligne de visualisation affiche au moins deux symboles, à savoir:

- Le symbole

$$( \boxed{\phantom{x}} )$$

qui permet de déclarer que cette étape est initiale. Le programme démarre son exécution aux étapes initiales.

- Le symbole

$$( \boxed{\phantom{x}} )$$

qui permet d'introduire une divergence ou une convergence en OU.

La suite du diagramme fonctionnel s'obtient en déplaçant le curseur vers le bas au moyen de la touche (↓) ce qui permet d'obtenir l'écran représenté sur la figure 11c qui permet de définir l'étape et la transition aval.

Le curseur se trouve alors positionné sur l'étape aval pour saisir son numéro au moyen des touches numériques et de la touche de validation (ENT).

Sur cet écran, la ligne de visualisation indique les symboles suivants:

- Le symbole

$$( \boxed{\phantom{x}} )$$

qui permet de saisir une divergence ou une convergence en ET, et

- Le symbole (REC) qui permet de passer au mode de saisie de la réceptivité associée à la transition pointée par le curseur, et ce, en représentation graphique à contacts.

L'actionnement de la touche dynamique (REC) permet d'obtenir l'écran représenté figure 11d. Sur cet écran une sortie unique (bobine), virtuelle car non programmable, occupe automatiquement la zone action du réseau.

La saisie de toutes les conditions de la transition se fait alors en utilisant les touches dynamiques permettant de programmer les éléments du langage à contacts.

Un exemple de réceptivité a été représenté, en traits interrompus sur la figure 11d. Pour la saisie, on opère comme précédemment mentionné au chapitre traitant de la saisie du mode de représentation à contact.

La visualisation de l'étape aval s'obtient en déplaçant le curseur vers le bas ce qui provoque l'apparition d'un écran similaire à celui représenté figure 11b.

La saisie de séquences linéaires se fait ainsi par une succession d'étapes et de transitions.

L'utilisateur peut, selon ses préférences, soit définir les conditions de réceptivité de chaque transition immédiatement après chaque étape, soit définir l'ensemble de l'automatisme en représentation séquentielle puis faire réapparaître chaque transition à l'écran et la définir alors en représentation à contact après action sur la touche (REC).

Il convient de noter qu'une temporisation de valeur "Xi, V" est associée automatiquement à chaque étape "Xi" lorsque celle-ci est active. La base de temps de cette temporisation est fixée, par exemple à 1 seconde. La valeur "Xi, V" peut être lue par l'utilisateur ou le programme pour vérifier depuis combien de temps l'étape "Xi" est active. Lorsqu'une étape "Xi" reste active au bout d'une période de temps déterminée, par exemple 9999 secondes (2h 47), la valeur courante "Xi, V" repasse automatiquement à 0 et s'incrémente à nouveau.

Les divergences et les convergences en OU sont réalisées sur l'écran visualisant une étape entre deux transitions.

A cet effet, on revient à l'écran de recherche d'étape au moyen de la touche (CLEAR) et on entre le numéro de l'étape recherchée.

La divergence en OU s'obtient en plaçant le curseur au-dessus de la transition aval puis en créant la divergence entre deux branches parallèles au moyen de la touche dynamique

$$( \vdash\!\!\dashv )$$

(figure 11e).

Pour réaliser une convergence en OU, on place le curseur en dessous de la transition amont puis on presse sur la touche dynamique

$$( \vdash\!\!\dashv )$$

(figure 11f).

Le terminal peut, par exemple saisir jusqu'à 4 branches parallèles.

En déplaçant le curseur horizontalement et verticalement, on peut saisir le numéro de chaque étape au-dessus des lignes de convergence ou en dessous des divergences.

Les divergences et les convergences en ET s'obtiennent sur l'écran visualisant une transition entre deux numéros d'étapes.

On revient à l'écran visualisant l'étape amont par la touche (CLEAR) puis en indiquant le numéro de cette étape.

Pour réaliser une divergence en ET on place le curseur en dessous de la transition aval puis on crée la divergence au moyen de la touche dynamique

$$( \bowtie )$$

(figure 11g).

De même on crée une convergence en ET en plaçant le curseur au-dessus de la transition amont et en sollicitant la touche dynamique

$$( \bowtie )$$

(figure 11g).
La touche dynamique

$$( \bowtie )$$

crée donc une divergence ou une convergence en ET, avec possibilité de multiple (par exemple triple) juxtaposition.

La saisie des numéros des étapes situées en aval d'une divergence ou en amont d'une convergence s'effectue en déplaçant le curseur horizontalement et verticalement.

La sortie de la phase séquentielle s'obtient au moyen de la touche (CLEAR) repétée deux fois.

La modification d'un diagramme fonctionnel ne peut se faire que si le terminal se trouve en mode programmation. Pour rechercher l'étape "Xi" on revient au premier écran de recherche (figure 7d) puis, en appuyant sur la touche dynamique (SCH) on fait apparaître l'écran "objets recherchés" représenté sur la figure 11i. On peut alors définir l'étape recherchée "Xi" dans la zone SEQ. L'écran du diagramme fonctionnel centré sur l'étape "Xi" apparaîtra alors automatiquement.

Lorsque l'étape "Xi" est visualisée, il est ensuite possible de rechercher une des étapes amont ou aval à cette transition. A cet effet, on fait apparaître le curseur avec la touche Zoom (ZM) puis on déplace le curseur pour l'amener sur la transition recherchée.

La touche dynamique (REC) visualise le réseau de contact de la réceptivité associée à la transition, lequel peut être modifié comme tout autre réseau de contacts.

Après avoir représenté à l'écran les modifications, on valide le nouveau reseau avec la touche (ENT).

Le séquentiel graphique peut être modifié de la même manière qu'il a été programmé. Pour cela:
- On entre le numéro de l'étape recherchée sur le premier écran visualisé (figure 11a);
- On place le curseur sur les éléments à supprimer (couple étape-transition, convergence, divergence);
- On utilise ensuite la touche Delete: (SH) + (INS).

Si une transition graphique a été supprimée, la réceptivité associée programmée selon le mode de représentation à contact sera détruite. Les nouvelles réceptivités associées seront saisies comme en programmation.

Les insertions d'étapes et de transitions se font graphiquement sur le diagramme séquentiel qui peut être modifié étape par étape. Les transitions insérées seront d'abord définies graphiquement puis sur le terminal en mode de représentation à contact, avec la touche dynamique (REC) de l'écran de transition (figure 11c).

La description qui va suivre illustre un exemple d'élaboration, en mode de représentation de type fonctionnel, de l'automatisme destiné à assurer le fonctionnement de la machine représentée figure 5.

**Exemple: II**

Le diagramme séquentiel de cet automatisme a été représenté (en mode de représentation graphique séquentiel) sur la figure 12.

Ce diagramme comprend tout d'abord une chaîne directe comprenant successivement:
- Une étape initiale (bloc 66) représentative de la position de départ de l'automatisme;
- Une transition 67 (marche automatique, barre 41 en butée);
- Une étape 68 représentative de la descente et de la rotation de la perceuse 48 avec arrosage.
- Une transition 69 (présence de la perceuse 48 en fin de course vers le bas);
- Une étape 70 représentative de la montée de la perceuse 48;
- Une transition 71 (détection de la perceuse 48 en position haute et de la scie 51 en butée fin de course arrière);
- Une étape 72 représentative de la poussée du vérin 44.

Cette chaîne directe se trouve rebouclée en amont de la première transition 67.

Par ailleurs le circuit comprend, en aval de la deuxième transition 69 une divergence en ET 73 de laquelle part un circuit parallèle comprenant une étape 74 représentative de la rotation et de l'avance de la scie 51, une transition 75 (détection du temps écoulé par une temporisation) et une étape 76 représentative du retour de la scie 51. Ce circuit parallèle se trouve raccordé à la chaîne principale, en amont de la transition 71, par l'intermédiaire d'une convergence en ET 77.

Pour pouvoir élaborer le diagramme fonctionnel sur le terminal, on procède tout d'abord aux différentes opérations décrites à propos des figures 10a, 10b, 10c, de manière à obtenir l'écran de saisie du diagramme fonctionnel représenté sur la figure 10d.

On appelle ensuite la programmation du combinatoire d'entrée au moyen de la touche CBI. On peut alors entrer, en mode de représentation à contact, les réseaux traitant de toutes les conditions de sécurité et les modes de marche du programme. Dans l'exemple de la figure 5, le combinatoire d'entrée peut ne comprendre qu'une réceptivité (contact) et qu'une action (bobine) permettant par exemple d'effectuer un arrêt d'urgence (bobine) en cas d'alarme sur un détecteur (contact).

Une fois ce ou ces réseaux introduits, on revient à l'écran de sélection (figure 10d) au moyen de la touche (CLEAR) puis on appelle le mode séquentiel par la touche dynamique (SEQ). L'activation de cette touche fait alors apparaître l'écran représenté figure 11a qui demande un numéro d'étape.

La première étape XO sera désignée par les chiffres

$$\emptyset\emptyset\emptyset\emptyset$$

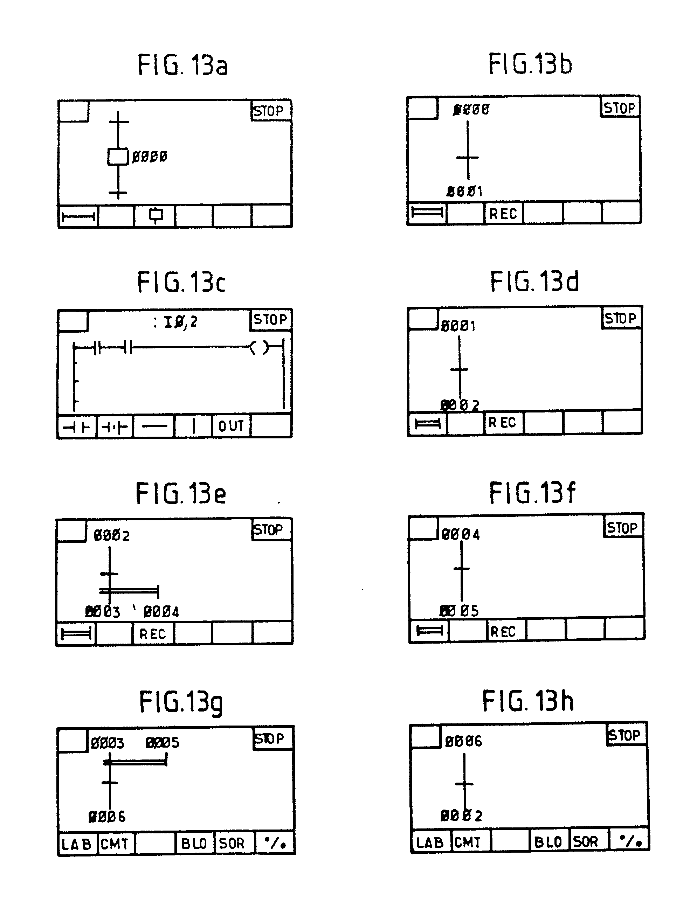

(figure 13a) et est déclarée étape "initiale" avec la touche dynamique

$$(\; \d\; ).$$

Comme précédemment mentionné, cette étape initiale XO est l'étape sur laquelle le programme reste arrêté lors de la mise sous tension de l'automate.

On définit ensuite l'étape aval XI (figure 13b) en appuyant sur la touche

$$(\; \boxed{\d}\; )$$

et en entrant le numéro

$$\emptyset\emptyset\emptyset 1$$

correspondant au moyen des touches (1) (ENT) puis on appuie sur la touche dynamique (REC) pour programmer la réceptivité associée à la transition entre Xo et XI.

L'action sur la touche dynamique (REC) fait apparaître sur la ligne de visualisation de l'écran les symboles utilisés dans le mode de représentation graphique "à contact".

La réceptivité associée à la transition Xo/XI peut, par exemple faire intervenir une bobine de sortie et deux contacts disposés en série, à savoir, un contact I 0,0 qui est passant lorsque la perceuse est en position haute et un contact I 0,2 qui est passant quand la scie se trouve en position arrière.

La saisie de cette réceptivité s'obtient alors au moyen des touches suivantes (figure 13c):

$$(\; \dashv\quad\vdash\; )$$

(I) (0) (,) (0) (ENT)

$$(\; \dashv\quad\vdash\; )$$

(I) (0) (,) (2) (ENT) (OUT).

Il convient de noter que dans la figure 13c, seule se trouve inscrite, dans le bandeau de visualisation, la référence du second contact (I 0,2), la référence du premier contact (I 0,0) ayant été écrasée par la seconde.

On valide ensuite le réseau au moyen de la touche (ENT).

Il convient de noter que les conditions de transition entre l'Etape Xo et l'Etape XI sont définies par ce réseau de contacts qui est "fictif" dans la mesure où la bobine de sortie ne peut jamais commander de sortie réelle. Par contre, si la bobine est activée, la transition est passante et l'étape suivante XI pourra être activée.

Une fois la réceptivité saisie et validée, on définit ensuite la liaison entre l'étape XI et l'étape X2 qui porte le numéro 0002 selon une procédure identique à la précédente (figure 13d).

La divergence en ET entre l'étape X2 et les étapes X3 et X4 est saisie au moyen de la touche

( ▬ )

(figure 13e). On procède ensuite à la saisie de l'étape X5 (figure 13f), de la convergence en ET des étapes X5 et X3 vers l'étape X6 (figure 13g) et au rebouclage du circuit vers l'étape X2 (figure 13h).

La fin du mode séquentiel est déclarée au moyen de la touche CLEAR (CL).

Comme précédemment mentionné, la phase suivante consiste en la saisie du combinatoire de sortie, lequel comprend six réseaux en mode de représentation graphique de type à contact qui correspondent chacun aux actions relatives aux six étapes du diagramme séquentiel.

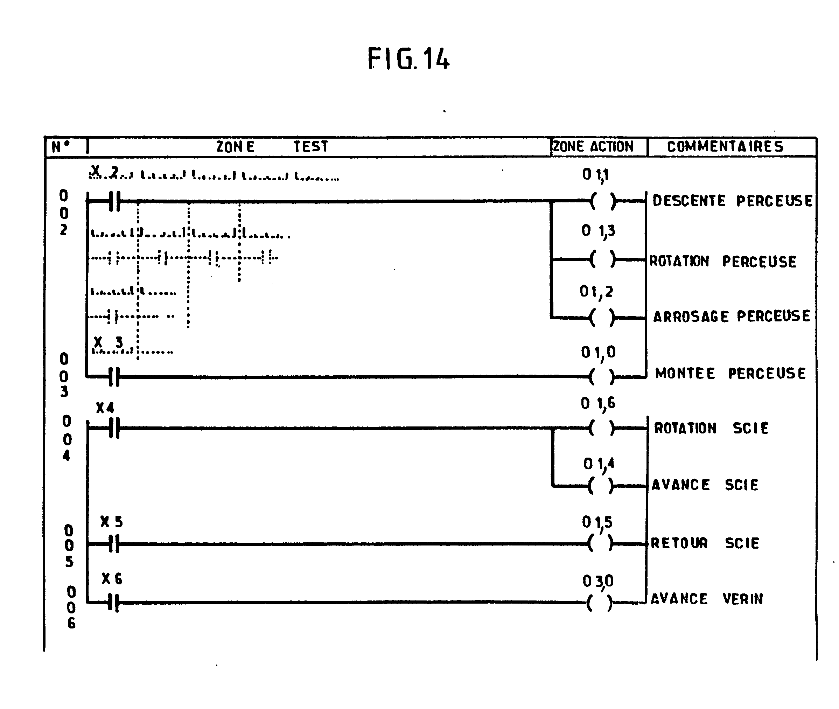

La figure 14 montre, en mode de représentation de type à contact, le diagramme du combinatoire de sortie de l'automatisme représenté figure 5.

Dans ce diagramme, le réseau portant l'étiquette 002 comprend un contact X2 correspondant à l'étape 68 du diagramme séquentiel représenté figure 12, qui effectue la commande (bobines 01,1; 01,3; 01,2) des actions suivantes:
- descente de la perceuse 48,
- rotation de la perceuse 48,
- arrosage.

Le réseau portant l'étiquette 003 comprend un contact X3 correspondant à l'étape 70 du diagramme séquentiel et une bobine 01,0 commandant la montée de la perceuse 48.

Le réseau portant l'étiquette 004 comprend un contact X4 correspondant à l'étape 74 du diagramme séquentiel, une bobine 01,6 commandant la rotation de la scie 51 et une bobine 01,4 commandant l'avance de la scie 51.

Le réseau portant l'étiquette 005 comprend un contact X5 correspondant à l'étape 76 du diagramme séquentiel et une bobine 01,5 commandant le retour de la scie 51.

Le réseau portant l'étiquette 006 comprend un contact X6 correspondant à l'étape 71 du diagramme fonctionnel et une bobine 04,0 commandant la poussée du vérin 44.

La saisie du combinatoire de sortie s'effectue en revenant tout d'abord à l'écran représenté figure 10d en appuyant deux fois sur la touche CLEAR puis en appuyant ensuite sur la touche dynamique CBO indiquée sur cet écran. On obtient ainsi un écran permettant une saisie selon le mode de représentation de type "à contact".

Cette saisie peut alors s'effectuer de la façon précédemment mentionnée et ne sera donc pas à nouveau décrite en détail. Après validation de cette saisie au moyen de la touche CLEAR (CL) le programme de l'automatisme se trouve contenu dans la mémoire vive du processeur.

Bien entendu, il est possible de procéder à la vérification de ce programme avant et/ou pendant son exécution.

Une alternative de réalisation de la présente invention consiste à ne programmer graphiquement que les parties séquentielles telles que représentées à la figure 12, puis à utiliser les moyens alphanumériques du clavier et le pointage par zoom pour programmer les relations logiques définissant respectivement les équations d'état de chaque sortie en fonction des entrées et autres variables qui la conditionnent.

Par exemple, l'opérateur saisira la réceptivité associée à la transition Xo/XI, après l'avoir pointée et sélectionnée par zoom, en agissant sur les touches suivantes:

(I) (0) (,) (1) (.) (I) (0) (,) (2) (Enter)
pour obtenir à l'écran et mémoriser
$X_1 > X_2 \mid 0,1 . \mid 0,2$

De même pour saisir que la sortie O 0,3 est active à l'étape $X_2$, après pointage et zoom sur $X_2$, l'opérateur agira sur les touches:

(Set) (0) (0) (,) (3) (Enter)
pour obtenir à l'écran et mémoriser
$X_2$ Set O 0,3.

## Revendications

1. Terminal pour l'élaboration de programmes utilisables par un automate programmable (5), ce terminal comprenant: un écran (3); un clavier (2) comportant au moins un ensemble de touches de fonctions, un ensemble de touches affectées à des symboles graphiques (13) et un ensemble de touches permettant d'introduire notamment des informations relatives à l'automatisme; et un processeur permettant d'effectuer la scrutation du clavier (2), la représentation graphique, à l'écran (3), d'au moins les symboles graphiques introduits au clavier, avec leurs paramètres utiles, le traitement des informations entrées sur le clavier (2), l'élaboration, à partir de ces informations d'un programme utilisable par l'automate (5) et la mise en mémoire de ce programme, caractérisé en ce qu'aux susdites touches graphiques (13) sont affectés les symboles d'au moins un mode graphique de représentation de type à contact et un mode de représentation de type séquentiel, et en ce que le processeur est conçu de manière à pouvoir élaborer le programme de l'automate (5) à la suite d'une séquence d'utilisation comprenant les phases suivantes:
- une première phase au cours de laquelle on réalise s'il y a lieu sur l'écran (3), en utilisant les touches correspondantes du clavier (2), une représentation de type "à contact" des sécurités et des modes de marche du processus;
- une deuxième phase au cours, de laquelle on réalise sur l'écran, en utilisant les touches correspondantes du clavier (2), une représentation graphique de type "séquentiel" définissant l'enchainement des étapes et des transitions de l'automatisme;

- une troisième phase au cours de laquelle on réalise sur l'écran (3), à l'aide des touches correspondantes, une représentation graphique de type "à contact", définissant les actions de l'automatisme qui doivent être exécutées lorsque les étapes qui leur sont associées sont actives, ladite séquence comprenant en outre une phase supplémentaire au cours de laquelle on effectue une représentation de type à contact des réceptivités associées à chacune des transitions.

2. Terminal pour l'élaboration de programmes utilisables par un automate programmable (5), ce terminal comprenant: un écran (3); un clavier (2) comportant au moins un ensemble de touches de fonctions, un ensemble de touches affectées à des symboles graphiques (13) et un ensemble de touches permettant d'introduire notamment des informations relatives à l'automatisme; et un processeur permettant d'effectuer la scrutation du clavier (2), la représentation, à l'écran (3), d'au moins les symboles graphiques et littéraux introduits au clavier, avec leurs paramètres utiles, le traitement des informations entrées sur le clavier (2), l'élaboration, à partir de ces informations d'un programme utilisable par l'automate (5) et la mise en mémoire de ce programme,
caractérisé, en ce qu'aux susdites touches sont affectés les symboles d'au moins un mode de représentation graphique de type séquentiel et un mode d'écriture littérale d'expressions logiques, et
en ce que le processeur est conçu de manière à pouvoir élaborer le programme de l'automate (5) à la suite d'une séquence d'utilisation comprenant les phases suivantes:

- une première phase au cours de laquelle on réalise s'il y a lieu sur l'écran (3), en utilisant les touches correspondantes du clavier (2), un affichage de type littéral des expressions logiques définissant les sécurités et les modes de marche du processus;

- une deuxième phase au cours de laquelle on réalise sur l'écran, en utilisant les touches correspondantes du clavier (2), une représentation graphique de type "séquentiel" définissant l'enchaînement des étapes et des transitions de l'automatisme;

- une troisième phase au cours de laquelle on réalise sur l'écran (3), à l'aide des touches correspondantes, un affichage de type littéral des expressions logiques définissant les actions de l'automatisme qui doivent être exécutées lorsque les étapes qui leur sont associées sont actives, au cours de laquelle on effectue un affichage de type littéral des expressions logiques définissant les réceptivités associées à chacune des transitions.

3. Terminal selon la revendication 1 ou 2, caractérisé en ce que la susdite phase intermédiaire intervient après la susdite troisième phase, et

en ce que, dans ce cas, on fait réapparaître chaque transition pour introduire les conditions de réceptivité selon le mode de représentation graphique de type à contact, ou selon un mode d'écriture littérale d'expressions logiques.

4. Terminal selon la revendication 1 ou 2, caractérisé en ce que l'on procède, immédiatement après chaque représentation séquntielle d'une transition, à l'introduction des réceptivités selon le mode de représentation graphique de type à contact, ou selon un mode d'écriture littérale d'expressions logiques.

5. Terminal selon l'une des revendications précédentes, caractérisé en ce que le processeur comprend des moyens permettant d'effectuer la mise en mémoire du programme source sous une forme utilisable par l'automate dans une mémoire vive (RAM) (26, 27, 28) intégrée au terminal et pouvant être lue par l'automate (5).

6. Terminal selon l'une des revendications précédentes, caractérisé en ce que le processeur comprend des moyens permettant la mémorisation du programme source, sous une forme utilisable par l'automate, dans une mémoire morte telle qu'une bande magnétique, une disquette ou même des mémoires programmables par exemple de type PROM ou EPROM.

7. Terminal selon l'une des revendications précédentes, caractérisé en ce que le processeur comprend des interfaces (30, 31) permettant sa liaison à des périphériques tels qu'une imprimante (9) ou un modem (10).

8. Terminal selon l'une des revendications précédentes, caractérisé en ce que le clavier (2) du terminal comporte:

- un clavier alphabétique (11) de type classique pouvant en outre comprendre des touches de fonction usuelles telles que, par exemple, une touche (SH) autorisant la deuxième fonction des touches alphabétiques, une touche (RC) pour le retour du curseur en début de ligne; des touches (SH) et (RC) pour le retour à la ligne;

- un clavier numérique (14) comprenant dix touches numériques (de 0 à 9) ainsi qu'éventuellement la virgule et une touche (ENT) pour valider en mémoire les instructions entrées par le clavier et présentes sur l'écran;

- des touches de fonction (16) comprenant une touche (ZM) destinée à faire apparaître le curseur à l'écran, quatre touches portant des flèches orientées haut bas, droite gauche, qui servent à assurer le déplacement du curseur sur l'écran, si celui-ci est présent ou pour obtenir éventuellement le défilement sur l'écran des informations mémorisées dans le cas où le curseur n'est pas présent; une touche (FNS) permettant d'effecteur une insertion à l'écran; une touche (CLR) servant à annuler la validation mémoire de l'écran et qui permet de remonter d'un niveau l'enchaînement des écrans; et une touche (QU) permettant de quitter le niveau affiché pour remonter au premier écran du chaînage;

- les susdites touches graphiques (13).

9. Terminal selon la revendication 8, caractérisé en ce que le processeur est conçu de manière à ce que l'activation de la touche (ZM) provoque l'agrandissement du symbole pointé par te curseur, par exemple pour visualiser la référence d'un contact ou d'une bobine ou les paramètres d'un bloc function, ou encore pour visualiser ou programmer le diagramme séquentiel associé à une macro-étape qui représente une succession de plusieurs étapes.

10. Terminal selon l'une des revendications précédentes, caractérisé en ce que les susdites touches graphiques (13) sont réparties en deux claviers distincts, à savoir, un clavier pour le mode de représentation graphique à contact et un clavier pour le mode de représentation graphique séquentiel.

11. Terminal selon l'une des revendications 1 à 10, caractérisé en ce que les susdites touches graphiques (13) sont des touches dynamiques, c'est-à-dire des touches associées à des configurations, à des symboles et à des fonctions qui varient selon le contexte d'utilisation du terminal, et en ce que le terminal comprend un moyen de visualisation permettant d'identifier les fonctions de chaque touche pour un contexte d'utilisation donné.

12. Terminal selon la revendication 11, caractérisé en ce que le processeur est conçu de manière à afficher sur l'écran, de préférence au niveau de sa ligne inférieure (19) (ligne de visualisation) des symboles servant à identifier les touches dynamiques (13).

13. Terminal selon l'une des revendications 11 et 12, caractérisé en ce que la susdite ligne de visualisation (19) sert en outre à afficher les différents "menus" ou "sous menus" permettant de faire passer le terminal d'un mode de fonctionnement à un autre, et en ce que ladite ligne de visualisation (19) affiche, pour chacune des configurations proposées par un "menu" détermine, un symbole, de préférence mémo-technique correspondant à une touche dynamique.

14. Terminal selon l'une des revendications précédentes, caractérisé en ce que le processeur est conçu pour diviser l'écran en au moins:

- un bandeau de visualisation des adresses (16) permettant de visualiser notamment les références des contacts, des bobines et des blocs de fonction affichés sur l'écran (2);

- une zone de visualisation (15) pouvant servir à l'affichage de multiples informations et, en particulier, à la représentation graphique de l'automatisme, et

- la susdite ligne de visualisation (19).

15. Terminal selon la revendication 14, caractérisé en ce que l'écran comprend en outre une zone évènement (17) pouvant comprendre un symbole F signifiant la présence d'un ou plusieurs bits forcés, un symbole ! signalant la présence d'un défaut dans le terminal ou dans l'automate (5) et un symbole d'signalant une manipulation dangereuse.

16. Terminal selon la revendication 15, caractérisé en ce que l'action sur la touche (ZM) avec le curseur positionné sur l'un des susdits symboles, F, !, Δ provoque l'affichage sur l'écran de:

- la liste des bits forcés,
- la liste des bits actifs,
- un message indiquant la manipulation dangereuse.

17. Terminal selon l'une des revendications précédentes, caractérisé en ce que le processeur est conçu de manière à pouvoir afficher, dans la zone de visualisation (15), dans le cas d'un mode de représentation graphique à contact,

- soit n lignes de m contacts d'entrée et/ou de variables internes et une bobine de sortie avec leurs connexions horizontales et/ou verticales;

- soit les blocs de fonction et leurs paramètres, et, dans le cas d'un mode de représentation séquentiel, au moins les étapes et les transitions du diagramme séquentiel.

18. Terminal selon l'une des revendications précédentes, caractérisé en ce que le processeur est en outre conçu pour permettre la réalisation d'automatismes uniquement à l'aide du mode de représentation à contact, ce mode de fonctionnement pouvant être sélectionné grâce aux fonctions "menu" affectées aux susdites touches dynamiques (13).

19. Terminal selon l'une des revendications précédentes, caractérisé en ce que le processeur comprend un microprocesseur (20) duquel partent au moins un bus des données (21) et un bus des adresses (22), en ce que le bus des données se trouve connecté:

- à un afficheur constituant l'écran (3) du terminal;

- à l'entrée du clavier (2) par l'intermédiaire d'un loquet (24) et d'un décodeur (25), la sortie de ce clavier se trouvant connectée unidirectionnellement sur le bus (21);

- à un ensemble de mémoires vives RAM (26, 27, 28);

- à un récepteur-émetteur universel asynchrone (29) présentant une entrée parallèle raccordée aux conducteurs du bus (21) et une sortie séquentielle raccordée à des connecteurs intérieurs (30, 31) du terminal (1), par l'intermédiaire d'un commutateur (32) piloté à partir des informations générées sur le bus (21), et

- à un ensemble de mémorisation (35), par l'intermédiaire d'un circuit de commutation (33) piloté à partir des informations génerées par le bus des adresses et décodées par un décodeur (34), et

en ce que le bus des adresses (21) se trouve connecté:

- au décodeur (34) effectuant la commande du circuit de commutation (33),

- à l'ensemble de mémorisation (35), par l'intermédiaire du circuit de commutation et,

- à l'ensemble de mémoires vives (26, 27, 28).

20. Terminal selon la revendication 19, caractérisé en ce que l'ensemble de mémorisation (35) comprend des moyens de connexion permettant d'enficher une mémoire morte enfichable, par exemple de type PROM ou EPROM et éventuellement un programmeur de PROM ou d'EPROM.

21. Terminal selon l'une des revendications précédentes, caractérisé en ce que le processeur comprend des moyens de réafficher successivement sur l'écran les représentations graphiques correspondant au programme préalablement mémorisé.

22. Terminal selon les revendications 1 et 2, caractérisé en ce qu'il met en oeuvre un mode de représentation graphique de type séquentiel et, au choix de l'utilisateur pour chaque instruction, un mode de représentation grahpique de type à contact ou un mode d'écriture littérale d'expressions logiques.

**Patentansprüche**

1. Datenendeinrichtung für die Programmherstellung für eine speicherprogrammierbare Steuerung (5), wobei die Datenendeinrichtung enthält: einen Schirm (3), eine Tastatur (2) mit mindestens einer Funktionstasteneinheit, einer Tasteneinheit für graphische Symbole (13) und einer Tasteneinheit, die es insbesondere ermöglicht, die automatische Steuerung betreffende Informationen einzuspeisen, und einen Prozessor zur Abfragung der Tastatur (2) zur Darstellung auf dem Schirm (3), von mindestens den mittels der Tastatur eingespeisten graphischen Symbolen und deren nutzbaren Kennwerten, zur Verarbeitung der mittels der Tastatur (2) eingespeisten Informationen, zur Herstellung, ausgehend von diesen Informationen, von einem für die Steuerung (5) verwendbaren Programm und zur Speicherung dieses Programms, dadurch gekennzeichnet, dass besagten graphischen Tasten (13) die Symbole von mindestens einer graphischen Darstellungsweise des Kontakttyps und einer Darstellungsweise des Sequentialtyps zugeordnet sind und dass der Prozessor so ausgebildet ist, dass er das Programm für die Steuerung (5) herstellen kann, nach einer Verwendungsfolge mit den folgenden Operationen:

- einer ersten Operation, während derer man gegebenenfalls auf dem Schirm (3) mit Hilfe der entsprechenden Tasten der Tastatur (2) eine Darstellung des "Kontakt"-typs der Schutzvorrichtungen und der Funktionsweisen des Verfahrens bewirkt,

- einer zweiten Operation, während derer man auf dem Schirm, mit Hilfe der entsprechenden Tasten der Tastatur (2), eine graphische Darstellung des "Sequential"-typs bewirkt, welche die Verkettung der Steuerstufen und -übergänge bestimmt,

- einer dritten Operation, in deren Verlauf man auf dem Schirm (3), mit Hilfe der entsprechenden Tasten eine graphische Darstellung des "Kontakt"-typs bewirkt, welche die Steuervorgänge bestimmt, die ausgeführt werden müssen, wenn die zugeordneten Stufen aktiv sind, wobei besagte Sequenz ausserdem eine zusätzliche Operation beinhaltet, in deren Verlauf eine Darstellung des Kontakttyps der jedem Übergang zugeordneten Empfänglichkeiten bewirkt wird.

2. Datenendeinrichtung zur Herstellung von Programmen für eine speicherprogrammierbare Steuerung (5), wobei diese Datenendeinrichtung enthält: einen Schirm (3), eine Tastatur (2) mit mindestens einer Funktionstasteneinheit, einer Tasteneinheit, die graphischen Symbolen (13) zugeordnet ist und einer Tasteneinheit, um insbesondere die Steuerung betreffende Informationen einzuspeisen; und einen Prozessor zur Abfragung der Tastatur (2), zur Darstellung auf dem Schirm (3) von mindestens den mittels der Tastatur eingespeisten graphischen und Literalsymbolen und deren nutzbaren Kennwerten, zur Verarbeitung der mittels der Tastatur (2) eingespeisten Informationen, zur Herstellung ausgehend von diesen Informationen, von einem Programm, das von der Steuerung (5) verwendet werden kann, und zur Einspeisung dieses Programms, dadurch gekennzeichnet dass besagten Tasten die Symbole mindestens einer graphischen Darstellungsweise des Sequentialtyps und eine Literalschreibweise logischer Ausdrücke zugeordnet sind, und dass der Prozessor so ausgebildet ist, dass er das Programm für die Steuerung (5) herstellen kann, nach einer Verwendungsfolge mit folgenden Operationen:

- einer ersten Operation, in deren Verlauf gegebenenfalls auf dem Schirm (3), mit Hilfe der entsprechenden Tasten der Tastatur (2) eine Anzeige des Literaltyps der logischen Ausdrücke, welche die Schutzvorrichtungen und die Funktionsweisen des Verfahrens bestimmen, erscheint;

- einer zweiten Operation, in deren Verlauf auf dem Schirm, mit Hilfe der entsprechenden Tasten der Tastatur (2), eine graphische Darstellung des "Sequential"typs erscheint, welche die Verkettung der Steuerstufen und -übergänge bestimmt;

- eine dritte Operation in deren Verlauf auf dem Schirm (3), mit Hilfe der entsprechenden Tasten, eine Anzeige des Literaltyps der logischen Ausdrücke erscheint, welche die Funktionen der Steuerung bestimmen, die ausgeführt werden müssen wenn die ihnen zugeordnet Stufen aktiv sind, wobei besagte Sequenz ausserdem eine zusätzliche Operation beinhaltet, in deren Verlauf eine Anzeige des Literaltyps der logischen Ausdrücke erscheint, welche die jedem Übergang zugeordneten Empfänglichkeiten bestimmen.

3. Datenendeinrichtung nach Anspruch 1 oder 2, dadurch gekennzeichnet, dass besagte Zwischenoperation nach besagter dritten Phase stattfindet und dass man, in diesem Falle, jeden Übergang wiedererscheinen lässt, um die Empfänglichkeitsbedingungen gemäss der Darstellungsweise des Kontakttyps oder gemäss einer Literalschreibweise logischer Ausdrücke einzugeben.

4. Datenendeinrichtung nach Anspruch 1 oder 2, dadurch gekennzeichnet, dass man, gleich nach jeder Sequentialdarstellung eines Übergangs, die Empfänglichkeiten gemäss einer graphischen Darstellungsweise des Kontakttyps oder einer Literalschreibweise logischer Ausdrücke eingibt.

5. Terminal nach einem der vorgehenden Ansprüche, dadurch gekennzeichnet, dass der Prozessor Mittel enthält, um das Ursprungsprogramm in einer für die Steuerung verwendbaren Form in einem Schreiblesespeicher (RAM) (26, 27, 28) zu speichern, der in den Terminal eingebaut ist und von der Steuerung (5) abgelesen werden kann.

6. Terminal nach einem der vorhergehenden Ansprüche, dadurch gekennzeichnet, dass der Prozessor Mittel enthält, um das Ursprungsprogramm in einer für die Steuerung verwendbaren Form in einem Nurlesespeicher zu speichern, wie einem Magnetband, einer Diskette oder aber in programmierbaren Speichern des PROM oder EPROM-Typs.

7. Terminal nach einem der vorhergehenden Anspüche, dadurch gekennzeichnet, dass der Prozessor Grenzflächen (30, 31) enthält, welche es erlauben, ihn an Peripheriegeräte, wie eine Druckeinheit (9) oder ein Modem (10) anzuschliessen.

8. Terminal nach einem der vorhergehenden Ansprüche, dadurch gekennzeichnet, dass die Tastatur (2) des Terminals enthält:
- eine alphabetische Tastatur (11) der herkömmlichen Art, zu der ausserdem gebräuchliche Funktionstasten gehören können, wie zum Beispiel, eine Taste (SH), welche die zweite Funktion der alphabetischen Tasten freigibt, eine Taste (RC), um den Läufer an den Linienanfang rückzustellen Tasten (SH) und (RC) für den Zeilenvorschub;
- eine Digitaltastatur (14) mit zehn Digitaltasten (von 0 bis 9), sowie eventuell dem Komma, und einer Taste (ENT), um im Speicher die mittels der Tastatur eingegebenen und auf dem Schirm dargestellten Befehle freizugeben;
- Funktionstasten (16) mit einer Taste (ZM) mittels derer der Läufer auf dem Schirm erscheint, vier Tasten mit nach oben, unten, rechts und links zeigenden Pfeilen, welche die Verschiebungen des Läufers auf dem Schirm bewirken, sofern dieser dort erscheint, oder um gegebenenfalls auf dem Schirm die gespeicherten Informationen vorbeilaufen zu lassen, sofern der Läufer nicht anwesend ist; eine Taste (FNS) zur Sichtbarmachung auf dem Schirm; eine Taste (CLR), die dazu dient, die Speichergültigmachung des Schirms zu widerrufen und in der Verkettung der Schirme um eine Ordnung zurückzugehen, und eine Taste (QU), mittels derer es möglich ist, die angezeigte Ordnung zu verlassen und auf den ersten Schirm der Verkettung zurückzugehen;
- die besagten graphischen Tasten (13).

9. Terminal nach Anspruch 8, dadurch gekennzeichnet, dass der Prozessor so angelegt ist dass die Aktivierung der Taste (ZM) die Vergrösserung des vom Läufer bezeichneten Symbols bewirkt, zum Beispiel, um die Referenz eines Kontaktes oder einer Spule oder die Kennwerte eines Funktionsblocks oder das einer Makroetappe zugeordnete Ablaufdiagramm, das eine Folge mehrerer Etappen darstellt, sichtbar zu machen oder zu programmieren.

10. Terminal nach einem der vorhergehenden Ansprüche, dadurch gekennzeichnet, dass besagte graphische Tasten (13) auf zwei getrennte Tastaturen verteilt sind das heisst eine Tastatur für die graphische Kontaktdarstellungsweise und eine Tastatur für die graphische Sequentialdarstellungsweise.

11. Terminal nach einen der Ansprüche 1 bis 10, dadurch gekennzeichnet, dass besagte graphische Tasten (13) dynamische Tasten sind, das heisst Tasten, die Konfigurationen, Symbolen und Funktionen zugeordnet sind, welche, entsprechend den Gebrauchsbedingungen des Terminals, veränderlich sind, und dass der Terminal ein Anzeigemittel enthält, welches die Identifizierung der Funktionen jeder Taste für bestimmte Gebrauchsbedingungen ermöglicht.

12. Terminal nach Anspruch 11, dadurch gekennzeichnet, dass der Prozessor so ausgebildet ist, dass auf dem Schirm, vorzugsweise in Höhe der unteren Linie (19) (Anzeigelinie) Symbole sichtbar gemacht werden welche zur Identifizierung der dynamischen Tasten (13) dienen.

13. Terminal nach einem der Ansprüche 11 und 12, dadurch gekennzeichnet, dass besagte Anzeigelinie (19) ausserdem zur Sichtbarmachung der verschiedenen "Menus" oder "Submenus" dient, welche es ermöglichen, dass der Terminal von einer Betriebsweise in eine andere übergeht, und dass besagte Anzeigelinie (19) für jede der von einem bestimmten "Menu" vorgeschlagenen Konfigurationen ein, vorzugsweise memotechnisches, Symbol sichtbar macht, welches einer dynamischen Taste entspricht.

14. Terminal nach einem der vorhergehenden Ansprüche, dadurch gekennzeichnet, dass der Prozessor so angelegt ist, dass er den Schirm mindestens aufteilt in:

- einen Streifen, welcher die Adressen (16) anzeigt und es insbesondere ermöglicht, die Referenzen der auf dem Schirm (3) angezeigten Kontakte, Spulen und Funktionsblocks sichtbar zu machen

- eine Anzeigezone (15), die zur Sichtbarmachung diverser Informationen dienen kann und insbesondere zur graphischen Darstellung der Steuerung und

- die besagte Anzeigelinie (19).

15. Terminal nach Anspruch 14, dadurch gekennzeichnet, dass der Schirm ausserdem eine Ereigniszone (17) enthält, die ein Symbol F enthalten kann, welches die Anwesenheit eines oder mehrerer gesteuerter Bits bedeutet, ein Symbol !, welches die Anwesenheit eines Defektes im Terminal oder in der Steuerung (5) anzeigt und ein Symbol Δ, welches eine gefährliche Manipulation anzeigt.

16. Terminal nach Anspruch 15, dadurch gekennzeichnet dass die Betätigung der Taste (ZM), wenn der Läufer auf eines der besagten Symbole F, !, Δ zeigt, auf dem Schirm sichtbar macht:

- die Liste der gesteuerten Bits,
- die Liste der aktiven Bits,
- eine Anzeige, welche auf die gefährliche Manipulation aufmerksam macht.

17. Terminal nach einem der vorhergehenden Ansprüche, dadurch gekennzeichnet, dass der Prozessor so angelegt ist, dass er in der Anzeigezone (15) im Falle einer graphischen Kontaktdarstellungsweise sichtbar macht:

- entweder n Linien von m Eingangskontakten und/oder internen Variablen und eine Ausgangsspule mit ihren waagerechten und senkrechten Verbindungen,

- oder die Funktionsblocks und ihre Kennwerte, und im Falle einer Sequentialdarstellung, mindestens die Etappen und Übergänge des Sequentialdiagramms.

18. Terminal nach einem der vorhergehenden Ansprüche, dadurch gekennzeichnet, dass der Prozessor ausserdem so angelegt ist, dass es möglich ist, Steuerungen nur mit Hilfe der Kontaktdarstellungsweise zu bewirken und diese Betriebsart mittels der den besagten dynamischen Tasten (13) zugeordneten "Menu"-Funktionen gewählt werden kann.

19. Terminal nach einem der vorhergehenden Ansprüche, dadurch gekennzeichnet, dass der Prozessor einen Mikroprozessor (20) enthält, von dem mindestens ein Datenbus (21) und ein Adressenbus (22) ausgehen, dass der Datenbus angeschlossen ist:

- an ein Anzeigemittel welches den Schirm (3) des Terminals bildet;

- an den Eingang der Tastatur (2), durch eine Verriegelung (24) und einen Decoder (25), wobei der Ausgang dieser Tastatur in einer Richtung wirkend an den Bus (21) angeschlossen ist;

- an eine Schreib-lesespeichereinheit (26, 27, 28);

- an einen Asynchron-Universalempfänger/sender (29), welcher einen parallelen Eingang besitzt, der an die Bus(21)-leiter angeschlossen ist und einen Sequentialausgang, der an innere Leiter (30, 31) des Terminals (1) angeschlossen ist, durch einen Schalter (32), der durch die auf dem Bus (21) hervorgebrachten Informationen gesteuert wird, und

- an eine Speichereinheit (35), durch einen Schaltkreis (33), der von den Informationen gesteuert wird, die vom Adressenbus hervorgebracht und vom Decoder (34) entschlüsselt werden,

und dass der Adressenbus (21) angeschlossen ist :

- an den Decoder (34), welcher den Schaltkreis (33) steuert,

- an die Speichereinheit (35), durch den Schaltkreis und

- an die Schreib-lesespeichereinheit (26, 27, 28).

20. Terminal nach Anspruch 19, dadurch gekennzeichnet, dass die Speichereinheit (35) Anschlussmittel enthält die es ermöglichen, einen steckbaren Nurlesespeicher durch Einstecken anzuschliessen, zum Beispiel des PROM oder EPROM-Typs und gegebenenfalls einen PROM oder EPROM-Programmierer.

21. Terminal nach einem der vorhergehenden Ansprüche, dadurch gekennzeichnet, dass der Prozessor Mittel enthält, um nacheinander auf dem Schirm die dem vorher gespeicherten Programm entsprechenden graphischen Darstellungen wieder sichtbar zu machen.

22. Terminal nach einem der Ansprüche 1 und 2, dadurch gekennzeichnet, dass er eine graphische Darstellungsweise des Sequentialtyps anwendet und, je nach Wahl des Benutzers für jeden Befehl, eine graphische Darstellungsweise des Kontakttyps oder eine Literalschreibweise logischer Ausdrücke.

**Claims**

1. A terminal for generating programs usable by a programmable controller (5), said terminal comprising: a screen (3); a keyboard (2) having at least one set of function keys, a set of keys assigned to graphic symbols (13) and a set of keys for introducing more especially information relative to the automatic control - and a processor for effecting scanning of the keyboard (2), the graphic representation on the screen (3) of at least the graphic symbols introduced on the keyboard with their useful parameters, the processing of the data entered on the keyboard (2), the generation from this data of a program usable by the controller (5) and the storage of this program, characterized in that the symbols of at least one contact type representation graphic mode and one sequential type representation mode are assigned to said graphic keys (13) and in that said processor is designed so as to be able to generate the program of the controller (5) following a sequence of use comprising the following phases:

- a first phase during which there is formed, if need be, on the screen (3), using the corresponding keys of the keyboard (2) a "contact" type representation of the safety arrangements and operating modes of the process;

- a second phase during which there is formed on the screen using the corresponding keys of the keyboard (2), a "sequential" type graphic representation defining the chaining of the steps and transitions of the automatic control;

- a third phase during which there is formed on the screen (3) by means of the corresponding keys, a "contact" type graphic representation defining the actions of the automatic control which must be executed when the steps which are associated therewith are active, said sequence further comprising an additional phase during which a contact type representation is effected of the receptivities associated with each of the transitions.

2. A terminal for generating programs usable by a programmable controller (5) said terminal comprising: a screen (3); a keyboard (2) comprising at least one set of function keys, a set of keys assigned to graphic symbols (13) and a set of keys for introducing more especially data relative to the automatic control; and a processor for effecting scanning of the keyboard (2), representation on the screen (3) of at least the graphic and literary symbols introduced by the keyboard, with their useful parameters, processing of the data entered on the keyboard (2), generation from this data of a program usable by the controller (5) and storage of this program, characterized in that the symbols of at least one sequential type graphic representation mode and a logic expression literal writing mode are assigned to said keys, and in that said processor is designed so as to be able to generate the program of the controller (5) following a sequence of use comprising the following phases:

- a first phase during which there is formed, if required, on the screen (3), using the corresponding keys of the keyboard (2), a literal type display of the logic expressions defining the safety arrangements and the operating modes of the process;

- a second phase during which there is formed on the screen, using the corresponding keys of the keyboard (2), a "sequential" type graphic representation defining the chaining of the steps and of the transitions of the automatic control;

- a third phase during which there is formed on the screen (3) by means of the corresponding keys, a literal type display of the logic expressions defining the actions of the automatic control which must be carried out when the steps which are associated therewith are active, said sequence further comprising an additional phase during which a literal type display is formed of the logic expressions defining the receptivities associated with each of the transitions.

3. The terminal as claimed in claim 1 or 2, characterized in that said intermediate phase takes place after said third phase and that, in this case, each transition is caused to reappear so as to introduce the conditions of receptivity according to the contact type graphic representation or according to a logic expression literal writing mode.

4. The terminal as claimed in claim 1 or 2, characterized in that immediately after each sequential representation of a transition, the receptivities are introduced according to the contact type graphic representation mode or according to a logic expression literal writing mode.

5. The terminal as claimed in one of the preceding claims, characterized in that said processor comprises means for storing the source program in a form usable by the controller in a RAM (26, 27, 28) integrated in the terminal and able to be read by the controller (5).

6. The terminal as claimed in one of the preceding claims, characterized in that said processor comprises means for storing the source program, in a form usable by the controller, in a ROM such as a magnetic tape, a disk or even programmable memories, for example of the PROM or EPROM type.

7. The terminal as claimed in one of the preceding claims, characterized in that said processor comprises interfaces (30, 31) for connection thereof to peripherals such as a printer (9) or a modem (10).

8. The terminal as claimed in one of the preceding claims, characterized in that the keyboard (2) of said terminal comprises:

- an alphabetic keyboard (11) of conventional type further comprising as required usual function keys such for example as a key (SH) enabling the second function of the alphabetic keys, a key (RC) for returning the pointer to the beginning of the line, keys (SH) and (RC) for returning to the line;

- a digital keyboard (14) compriding ten digital keys (from 0 to 9), as well possibly as the comma and a key (ENT) for validating in the memory the instructions entered by the keyboard and presented on the screen;

- function keys (16) comprising a key (ZM) for causing the pointer to appear on the screen, four keys bearing arrows pointing upwardly, downwardly, to the right and to the left for moving the pointer over the screen if this latter is present or for possibly causing stored data to pass across the screen in the case where the pointer is not present; a key (FNS) for effecting an insertion on the screen; a key (CLR) for clearing the memory validation of the screen and for going back a level in the chaining of the screens ; and a key (QU) for leaving the displayed level to go back to the first screen of the chain;

- said graphic keys (13).

9. The terminal as claimed in claim 8, characterized in that said processor is designed so that activation of the key (ZM) causes enlargement of the symbol indicated by the pointer, for example for displaying the reference of a contact or of a coil or the parameters of a function block, or else for displaying or programming the sequential diagram associated with a macrostep which represents a succession of several steps.

10. The terminal as claimed in one of the preceding claims, characterized in that said graphic keys (13) are divided into two separate keyboards, namely a keyboard for the contact graphic representation mode and a keyboard for the sequential graphic representation mode.

11. The terminal as claimed in one of claims 1 to 10, characterized in that said graphic keys (13) are dynamic keys, i.e, keys associated with configurations, with symbols and with functions which vary depending on the context of use of the terminal and in that said terminal comprises a display means for identifying the functions of each key for a given context of use.

12. The terminal as claimed in claim 11, characterized in that said processor is designed as as to display on the screen, preferably at the level of its lower line (19) (display line), symbols for identifying the dynamic keys (13).

13. The terminal as claimed in one of claims 11 and 12, characterized in that said display line (19) further serves for displaying the different "menus" or "sub menus" for causing the terminal to pass from one operating mode to another and in that said display line (19) displays, for each of the configurations proposed by a given "menu", a symbol, preferably memo-technical corresponding to a dynamic key.

14. The terminal as claimed in one of the preceding claims, characterized in that said processor is designed for dividing the screen into at least:
   - an address display strip (16) for displaying more especially the references of the contacts, of the coils and of the function blocks displayed on the screen (3);
   - a display zone (15) for displaying multiple data and, in particular, for the graphic representation of the automatic control; and
   - said display line (19).

15. The terminal as claimed in claim 14, characterized in that said screen further comprises an event zone (17) possibly comprising a symbol F signifying the presence of one or more forced bits, a symbol ! signalling the presence of a fault in the terminal or in the controller (5) and a symbol $\Delta$ signalling a dangerous manipulation.

16. The terminal as claimed in claim 15, characterized in that action on the key (ZM) with the pointer positioned on one of said symbols F, !, $\Delta$ causes display on the screen of:
   - the list of the forced bits,
   - the list of the active bits,
   - a message indicating the dangerous manipulation.

17. The terminal as claimed in one of the preceding claims, characterized in that said processor is designed so as to be able to display, in said display zone (15), in the case of a contact graphic representation mode,
   - either n lines of m input contacts and/or of internal variables and an output coil with their horizontal and/ or vertical connections;
   - or the function blocks and their parameters and, in the case of a sequential representation mode, at least the steps and the transitions of the sequential diagram.

18. The terminal as claimed in one of the preceding claims, characterized in that said processor is further designed for forming automatic controls solely by means of the contact representation mode, this operating mode may be able to be selected through the "menu" functions assigned to said dynamic keys (13).

19. The terminal as claimed in one of the preceding claims, characterized in that said processor comprises a microprocessor (20) from which extend at least a data bus (21) and an address bus (22), in that said data bus is connected:
   - to a display unit forming the screen (3) of the terminal;
   - to the input of the keyboard (2) through a latch (24) and a decoder (25), the output of this keyboard being connected unidirectionally to said data bus (21);
   - to an assembly of RAMs (26, 27, 28);
   - to a universal asynchronous receiver-transmitter (29) having a parallel input connected to the conductors of said data bus (21) and a sequential output connected to internal connectors (30, 31) of the terminal (1) through a switch (32) driven from data generated on said data bus (21), and
   - to a storage assembly (35), through a switching circuit (33) driven from data generated from the address bus and decoded by a decoder (34)
   and in that said address bus (21) is connected:
   - to the decoder (34) effecting control of the switching circuit (33),
   - to the storage assembly (35) through the switching circuit
   and
   - to the assembly of RAMs (26, 27, 28).

20. The terminal as claimed in claim 19, characterized in that said storage assembly (35) comprises connection means for plugging in a pluggable ROM, for example of the PROM or EPROM type and possibly a PROM or EPROM programmer.

21. The terminal as claimed in one of the preceding claims, characterized in that said processor comprises means for displaying again successively on the screen the graphic representations corresponding to the previously stored program.

22. The terminal as claimed in claims 1 or 2, characterised in that it uses a sequential type graphic representation mode and, depending on the choice by the user for each instruction, a contact type graphic representation mode or a logic expression literal writing mode.

FIG.1

0 133 397

## FIG. 2

## FIG. 3

FIG. 4

**0 133 397**

## FIG. 5

## FIG. 6

| N° | ZONE TEST | ZONE ACTION | COMMENTAIRES |
|---|---|---|---|
| 001 | 1.60 1.00 1.02 1.04 1.01 | 0 1,3 | ROTATION PERCEUSE |
| | 0.11 | 0.12 | ARROSAGE |
| | | 0.11 | DESCENTE PERCEUSE |
| | | 0.10 | |
| 002 | 1.01 10.0 | 0.10 | MONTEE PERCEUSE |
| | 0.10 | 0.16 | ROTATION SCIE |
| | | ( ) | |
| 003 | 0.16 | 0 0,6 | ROTATION SCIE |
| | | 0.14 | AVANCE SCIE |
| | | 0.15 | RECUL SCIE |
| 004 | 1.00 1.02 1.04 | 0 17 | AVANCE VERIN |

7

## FIG. 7a

| REG | PRG | TST | TRF | DGN | °/₀ |

## FIG. 7b

| NON | | | | | STOP |

## FIG. 7c

| CMT | | | LAD | | RAZ |

## FIG. 7d

| TOP | BOT | LAB | SCH | | |

## FIG. 7e

| LAB | CMT | | BLO | SOR | °/₀ |
| I | — | ⊣⊢ | ⊣⊬ | SOR | °/₀ |

## FIG. 7f

:I 0,2

| LAB | CMT | | BLO | SOR | °/₀ |
| I | — | ⊣⊢ | ⊣⊬ | SOR | °/₀ |

LAB 0 0 1 ENT °/₀
⊣⊢ I 0 , 5 ENT
I ⊣⊢ I 0 , 0 ENT
⊣⊢ 1 0 , 2 ENT

## FIG. 7g

:0 1,1

| I | — | ⊣⊢ | ⊣⊬ | SOR | °/₀ |
| LAB | CMT | | BLO | SOR | °/₀ |

⊣⊢ 1 0 , 4 ENT
← ← ← ↓
⊣⊢ 0 1 , 1 ENT
← ↓ →

9

## FIG. 7h

## FIG. 7i

## FIG. 7j

## FIG. 7k

FIG. 7l

FIG. 8a

FIG. 8d

FIG. 8e

FIG. 8b

FIG. 9

FIG. 8c

13

0 133 397

## FIG.10a

RUN

PRG | EXC | REG | TRF | DGN | %

## FIG.10b

RUN

MODE PROGRAMMATION

ARRET DE L'AUTOMATE?

NO | | | | STOP

## FIG.10c

STOP

MODE PROGRAMMATION

LAD | FD | | CLM | | CMT

## FIG.10d

STOP

PROGRAMMATION

DIAGRAMME FONCTIONNEL

CBI | | SEQ | | CBO |

## FIG.11a

STOP

SEQUENCIEL

N° ETAPE:?

## FIG.11b

STOP

X00

## FIG.11c

STOP

X00

X01

REC

## FIG.11d

STOP

( )

| | — | ─┤├ | ─╫╱ | SOR | BLO

## FIG.11e

STOP

X1

## FIG.11f

STOP

X2

X9S

15

FIG. 11g

FIG. 11h

FIG. 11i

FIG. 12

17

## FIG. 13a

## FIG.13b

## FIG.13c

## FIG.13d

## FIG.13e

## FIG.13f

## FIG.13g

## FIG.13h

19

# FIG.14

| N° | ZONE TEST | ZONE ACTION | COMMENTAIRES |
|---|---|---|---|
| 002 | X 2 | 0 1,1 | DESCENTE PERCEUSE |
| | | 0 1,3 | ROTATION PERCEUSE |
| | | 01,2 | ARROSAGE PERCEUSE |
| 003 | X 3 | 01,0 | MONTEE PERCEUSE |
| 004 | X4 | 0 1,6 | ROTATION SCIE |
| | | 0 1,4 | AVANCE SCIE |
| 005 | X 5 | 01,5 | RETOUR SCIE |
| 006 | X 6 | 03,0 | AVANCE VERIN |

0 133 397

11/11